(19) Europäisches Patentamt
European Patent Office
Office européen des brevets

(11) **EP 3 085 199 B1**

(12) **EUROPÄISCHE PATENTSCHRIFT**

(45) Veröffentlichungstag und Bekanntmachung des Hinweises auf die Patenterteilung:
**22.08.2018   Patentblatt 2018/34**

(21) Anmeldenummer: **14808607.7**

(22) Anmeldetag: **05.12.2014**

(51) Int Cl.:
*H05B 3/84* (2006.01)          *H05B 3/86* (2006.01)
*B32B 17/10* (2006.01)

(86) Internationale Anmeldenummer:
**PCT/EP2014/076676**

(87) Internationale Veröffentlichungsnummer:
**WO 2015/091016 (25.06.2015 Gazette 2015/25)**

(54) **BEHEIZBARE SCHEIBE MIT HOCHFREQUENZ-TRANSMISSION**

HEATABLE PANE WITH HIGH FREQUENCY TRANSMISSION

PLAQUE CHAUFFANTE DOTÉE D'UNE TRANSMISSION HAUTE FRÉQUENCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.12.2013   EP 13197404**

(43) Veröffentlichungstag der Anmeldung:
**26.10.2016   Patentblatt 2016/43**

(73) Patentinhaber: **Saint-Gobain Glass France**
**92400 Courbevoie (FR)**

(72) Erfinder:
• **GUILLAUME, Francois**
**52066 Aachen (DE)**

• **DROSTE, Stefan**
**52134 Herzogenrath (DE)**
• **STELLING, Bernd**
**52134 Herzogenrath (DE)**

(74) Vertreter: **Gebauer, Dieter Edmund**
**Splanemann**
**Patentanwälte Partnerschaft**
**Rumfordstraße 7**
**80469 München (DE)**

(56) Entgegenhaltungen:
**EP-A2- 1 168 888          WO-A2-2004/051869**
**WO-A2-2011/023974          DE-A1-102011 115 967**
**US-A1- 2004 200 821**

EP 3 085 199 B1

**Beschreibung**

Die Erfindung betrifft eine elektrisch beheizbare Scheibe, insbesondere eine Fahrzeugscheibe, mit transparenter, elektrisch leitfähiger Beschichtung und niedriger Transmissionsdämpfung für elektromagnetische Strahlung im Hochfrequenzbereich. Des Weiteren betrifft die Erfindung ein Verfahren zur Herstellung einer solchen Scheibe und deren Verwendung.

Aktuelle Kraftfahrzeuge benötigen eine Vielzahl von technischen Einrichtungen zum Senden und Empfangen von elektromagnetischer Strahlung zum Betrieb von Grunddiensten wie Rundfunkempfang, vorzugsweise in den Bändern AM, FM oder DAB, Mobiltelefonie in den Bändern GSM 900 und DCS 1800, UMTS und LTE sowie satellitengestützer Navigation (GPS) und WLAN.

Gleichzeitig weisen moderne Fahrzeugverglasungen zunehmend allseitige und vollflächige elektrisch leitfähige und für sichtbares Licht transparente Beschichtungen auf. Diese transparenten, elektrisch leitfähigen Beschichtungen schützen beispielsweise Innenräume vor Überhitzung durch Sonnenlicht oder Auskühlung, indem sie einfallende Wärmestrahlung reflektieren, wie aus EP 378917 A bekannt ist. Transparente, elektrisch leitfähige Beschichtungen können durch Anlegen einer elektrischen Spannung eine gezielte Erwärmung der Scheibe bewirken, wie aus WO 2010/043598 A1 bekannt ist.

Den transparenten, elektrisch leitfähigen Beschichtungen ist gemeinsam, dass sie auch undurchlässig für elektromagnetische Strahlung im Hochfrequenzbereich sind. Durch eine allseitige und vollflächige Verglasung eines Fahrzeugs mit transparenten, elektrisch leitfähigen Beschichtungen ist das Senden und Empfangen von elektromagnetischer Strahlung im Innenraum nicht mehr möglich. Für den Betrieb von Sensoren wie Regensensoren, Kamerasystemen oder ortsfesten Antennen werden üblicherweise ein oder zwei örtlich begrenzte Bereiche der elektrisch leitfähigen, transparenten Beschichtung entschichtet. Diese entschichteten Bereiche bilden ein sogenanntes Kommunikationsfenster oder Datenübertragungsfenster und sind beispielsweise aus EP 1 605 729 A2 bekannt.

Da die transparenten, elektrisch leitfähigen Beschichtungen die Farbgebung und Reflexionswirkung einer Scheibe beeinflussen, sind Kommunikationsfenster optisch sehr auffällig. Durch entschichtete Bereiche können sich Störungen im Sichtfeld des Fahrers ergeben, die die Fahrsicherheit beieinträchtigen und die unbedingt zu vermeiden sind. Deshalb werden Kommunikationsfenster an unauffälligen Positionen der Scheibe angeordnet, beispielsweise im Bereich des Innenspiegels einer Windschutzscheibe, und durch Schwarzdrucke und Kunststoffblenden abgedeckt.

Derartige Kommunikationsfenster sind zu klein um das Senden und Empfangen hochfrequenter elektromagnetischer Strahlung zu ermöglichen, wie es beispielsweise für Mobiltelefonie und satellitengestützte Navigation (GPS) notwendig ist. Dies gilt insbesondere, wenn die dafür notwendige Antenne weit von der Scheibe entfernt angeordnet ist und durch das kleine Kommunikationsfenster nur wenig Signalintensität in den Empfangsbereich der Antenne gelangen kann beziehungsweise nur wenig Signalintensität durch das Kommunikationsfenster nach außen gesendet werden kann. Dennoch erwartet der Benutzer Mobiltelefone an jeder beliebigen Position im Innenraum eines Fahrzeugs betreiben zu können.

Aus der EP 0 717 459 A1, der US 2003/0080909 A1 und der DE 198 17 712 C1 sind Scheiben mit einer metallischen Beschichtung bekannt, die allesamt eine rasterförmige Entschichtung der metallischen Beschichtung aufweisen. Die rasterförmige Entschichtung wirkt als Tiefpass-Filter für eine auftreffende hochfrequente elektromagnetische Strahlung. Die Abstände des Rasters sind klein gegenüber der Wellenlänge der hochfrequenten elektromagnetischen Strahlung und damit wird ein relativ großer Anteil der Beschichtung strukturiert und die Durchsicht in größerem Maße beeinträchtigt. Die Entfernung eines größeren Anteils der Schicht ist langwierig und kostenintensiv. Des Weiteren sind derartige Scheiben nicht elektrisch beheizbar, da durch die rasterförmige Entschichtung sich keine Strompfade bilden können, die die metallische Beschichtung erwärmen könnten.

Weiterhin ist aus US 2004/200821 A1 eine Scheibe mit einer metallischen Beschichtung bekannt, wobei Bereiche der Beschichtung zur Verbesserung der Transmission von elektromagnetischer Strahlung entschichtet sind. Bei einer Ausgestaltung sind die zueinander gleich ausgebildeten entschichteten Strukturen entlang Linien angeordnet.

Die Aufgabe der vorliegenden Erfindung besteht nunmehr darin, eine Scheibe mit transparenter, elektrisch leitfähiger Beschichtung bereitzustellen, die elektrisch beheizbar ist und die eine ausreichende Transmission von hochfrequenter elektromagnetischer Strahlung, insbesondere zum Betrieb satellitengestützer Navigation (GPS) sowie von Mobiltelefonie in den Bändern GSM 900 und DCS 1800, UMTS und LTE ermöglicht, die optisch ansprechend ist und die Durchsicht durch die Scheibe nicht wesentlich einschränkt, und die kostengünstig hergestellt werden kann. Diese und weitere Aufgaben werden nach dem Vorschlag der Erfindung durch eine Scheibe und eine Scheibenanordnung mit den Merkmalen der unabhängigen Patentansprüche gelöst. Vorteilhafte Ausgestaltungen der Erfindung sind durch die Merkmale der Unteransprüche angegeben.

Ein Verfahren zur Herstellung einer beheizbaren Scheibe mit Hochfrequenz-Transmission sowie die Verwendung einer solchen Scheibe gehen aus weiteren unabhängigen Patentansprüchen hervor.

Eine erfindungsgemäße Scheibe umfasst mindestens eine erste Scheibe mit einer Außenseite und einer Innenseite, mindestens eine transparente, elektrisch leitfähige Beschichtung, die auf der Außenseite und/oder der Innenseite der ersten Scheibe angeordnet ist und mindestens zwei zum Anschluss an eine Spannungsquelle vorgesehene Sammelleiter, die mit der transparenten, elektrisch leitfähigen Beschichtung so verbunden sind, dass zwischen den Sammelleitern ein Strompfad für einen Heizstrom geformt ist.

Des Weiteren umfasst die erfindungsgemäße Scheibe mindestens drei Bereiche mit mindestens zwei Reihen von entschichteten Strukturen. Entschichtete Struktur bedeutet hier ein Abschnitt der transparenten, elektrisch leitfähigen Beschichtung in dem die Beschichtung nicht vorhanden oder entfernt ist. Reihe bedeutet hier bevorzugt die Gesamtheit von unmittelbar benachbarten entschichteten Strukturen, die im Wesentlichen orthogonal zur Richtung des Strompfads angeordnet sind. Insbesondere ist die Basislinie, also die Linie, die beispielsweise den untersten Punkt oder die unterste Linie der entschichteten Strukturen verbindet, orthogonal oder im Wesentlichen orthogonal zur Richtung des Strompfads angeordnet. Im Wesentlichen orthogonal bedeutet im Rahmen der hier vorliegenden Erfindung, dass der maximale Winkel zwischen der oben genannten Linie und der Richtung des Strompfads im Mittel zwischen 60° und 120°, bevorzugt zwischen 75° und 105° und besonders bevorzugt zwischen 85° und 95° ist.

Die entschichtete Struktur ist vollständig von der transparenten elektrisch leitfähigen Beschichtung umrandet. Das heißt mehrere entschichtete Strukturen sind nicht durch weitere Entschichtungen miteinander verbunden. Dies hat den besonderen Vorteil, dass der Heizstrom die entschichteten Strukturen umfließen kann und einen Heizbereich in der transparenten, elektrisch leitfähigen Beschichtung bildet.

Die entschichtete Struktur weist eine Länge a und eine Breite w auf, wobei die Länge a größer als die Breite w ist und die Länge a im Wesentlichen parallel zur Richtung des Strompfads angeordnet ist.

In einer alternativen Ausgestaltung der Erfindung ist die Längsrichtung der entschichteten Struktur im Wesentlichen parallel zur Richtung des kürzesten Abstandes zwischen den Sammelleitern angeordnet.

In einer weiteren alternativen Ausgestaltung der Erfindung ist die Längsrichtung der entschichteten Struktur im Wesentlichen parallel zur Richtung eines Strompfads ausgerichtet, wie er durch die gleiche Scheibe, aber ohne Bereiche mit entschichteten Strukturen, verlaufen würde.

Im Wesentlichen parallel bedeutet im Rahmen der hier vorliegenden Erfindung, dass der maximale Winkel $\gamma$ zwischen der Längsrichtung der entschichteten Struktur und der Richtung des Strompfads im Mittel kleiner oder gleich 30°, bevorzugt kleiner oder gleich 15° und besonders bevorzugt kleiner oder gleich 5° ist. Idealerweise ist die Längsrichtung parallel zur Richtung des Strompfads ausgerichtet, da dies den Heizstrom am wenigsten ablenkt und sich eine sehr homogene Heizleistungsverteilung ergibt. Dies hat den Vorteil, dass dann der Einfluss auf die Gesamtleistung minimal ist. Abweichungen von der Richtung des Strompfades können aus Gründen der Ästhetik oder aus Gründen der gewünschten Umleitung des Strompfades im beschriebenen geringen Maße (≤30°) und insbesondere lokal in der unmittelbaren Umgebung der entschichteten Struktur notwendig sein. Bei der erfindungsgemäßen Scheibe weist die transparente, elektrisch leitfähige Beschichtung mindestens drei Bereiche mit entschichteten Strukturen auf, wobei die Bereiche nebeneinander, und bevorzugt unmittelbar nebeneinander, und entlang des Strompfads oder entlang der Richtung des kürzesten Abstands zwischen den Sammelleitern angeordnet sind. Das heißt, es gibt mindestens einen ersten Bereich, daran angrenzend einen mittleren Bereich und daran angrenzend einen dritten Bereich. Erfindungsgemäß weist jeder Bereich mindestens zwei Reihen von entschichteten Strukturen auf. Ein Bereich wird bevorzugt durch die Fläche definiert, die alle Reihen eines Bereichs umfasst.

In einer vorteilhaften Ausgestaltung der Erfindung sind die entschichteten Strukturen Reihen im Wesentlichen orthogonal zur Richtung des Strompfads oder zur Richtung des kürzesten Abstands zwischen den Sammelleitern angeordnet.

Bei der erfindungsgemäßen Scheibe beträgt das Verhältnis von Länge a zu Breite w größer 5:1, bevorzugt größer 10:1 und insbesondere von 150:1 bis 25:1. Die Länge a ist stark von der Wellenlänge abhängig, während die Breite w so klein wie möglich gewählt wird, um den Einfluss auf den Stromfluss und die homogene Heizleistungsverteilung zu minimieren und so groß wie nötig um eine gewünschte und ausreichende Transmission zu ermöglichen.

In einer vorteilhaften Ausgestaltung der erfindungsgemäßen Scheibe beträgt das Verhältnis aus Abstand b zur Breite w von 3:1 bis 20:1, bevorzugt von 5:1 bis 10:1. Für kleinere Verhältnisse ergibt sich eine sehr schlechte und inhomogene Beheizbarkeit der Scheibe. Für größere Verhältnisse ist die Transmission hochfrequenter elektromagnetischer Strahlung nur ungenügend. Der Bereich um 7:1 ist dabei besonders vorteilhaft.

Die erfindungsgemäße Scheibe kann als Einzelscheibe aus einer ersten Scheibe mit einer transparenten, elektrisch leitfähigen Beschichtung ausgebildet sein. Alternativ kann die erfindungsgemäße Scheibe als Verbundscheibe ausgebildet sein. Eine erfindungsgemäße Verbundscheibe umfasst bevorzugt eine erste Scheibe, eine Zwischenschicht und eine zweite Scheibe sowie mindestens eine transparente, elektrisch leitfähige Beschichtung, die zwischen der Zwischenschicht und der ersten Scheibe und/oder zwischen der Zwischenschicht und der zweiten Scheibe angeordnet ist. Die transparente, elektrisch leitfähige Beschichtung kann auch auf einer Trägerfolie angeordnet sein, die bevorzugt über weitere Zwischenschichten innerhalb der ersten und der zweiten Scheibe einlaminiert wird.

Die erste Scheibe und/oder die zweite Scheibe kann sowohl im Falle der Einzelscheibe als auch im Falle der Verbundscheibe eine einzelne Scheibe oder eine bereits laminierte Verbundscheibe aus zwei oder mehr Scheiben sein, die durch die Lamination eine fest verbundene Einheit bilden.

Ein weiterer Aspekt der Erfindung umfasst eine Scheibenanordnung mit mindestens einer Scheibe oder einer Verbundscheibe und mindestens einer Sende- und/oder Empfangseinheit mit mindestens einem Sende- und/oder Empfangsbereich. Die Sende- und/oder Empfangseinheit ist beispielsweise ein GPS-Empfänger oder eine Mobilfunkantenne zum Senden und Empfangen von Mobilfunksignalen.

Die Sende- und/oder Empfangseinheit ist mit einem Abstand d auf einer Seite der Scheibe oder Verbundscheibe angeordnet und der Sende- oder Empfangsbereich auf die Scheibe oder Verbundscheibe derart ausgerichtet ist, dass ein von der gegenüberliegenden Seite der Scheibe oder Verbundscheibe eintreffendes Signal erfasst oder auf die gegenüberliegende Seite gesendet werden kann. Bei Verwendung der Scheibenanordnung in einem Fahrzeug und insbesondere als Windschutzscheibe ist die Sende- und/oder Empfangseinheit auf der dem Fahrzeuginnenraum zugewandten Seite der Scheibe angeordnet. Signal bedeutet im Rahmen der hier vorliegenden Erfindung eine hochfrequente elektromagnetische Strahlung, die von der Sende- und/oder Empfangseinheit gesendet und/oder empfangen wird.

Die Scheibe umfasst mindestens einen ersten Bereich, einen mittleren Bereich und einen dritten Bereich. Der mittlere Bereich ist vorteilhafterweise derart angeordnet, dass das Signal unter einem maximalen Einfallswinkel $\alpha_{max,0}$ von 5° bis 30°, bevorzugt von 10° bis 20°, auf die Scheibe oder Verbundscheibe trifft oder diese verlässt. Des Weiteren ist im ersten und/oder dritten Bereich der Betrag des Einfallswinkel $\alpha$ größer als der maximale Einfallswinkel $\alpha_{max,0}$. Der Einfallswinkel $\alpha$ wird dabei in der Ebene, die durch die Normalenrichtung auf die Scheibe oder Verbundscheibe und die Richtung des Strompfads gebildet wird, bestimmt.

In einer vorteilhaften Ausgestaltung der Erfindung beträgt der Abstand d größer oder gleich 80 mm und bevorzugt von 80 mm bis 750 mm. Der Vorteil der erfindungsgemäßen Lösung ist in diesem Abstand d besonders groß, da somit durch die mindestens drei Bereiche eine möglichst gute Überdeckung der Fläche gegeben ist, die sich durch den Öffnungswinkel der Sende- und/oder Empfangseinheit (das heißt der Halbwertsbreite des entsprechenden Richtdiagramms) von 60° bis 150° und bevorzugt von 100° bis 140° auf der Scheibe ergibt, so dass der maximale Signaleintrag durch die Scheibe erfasst oder gesendet werden kann.

Die Fläche der Bereiche und die Fläche auf der der Sende- und/oder Empfangsbereich die Scheibe schneidet, stimmen bevorzugt zu mehr als 70%, besonders bevorzugt zu mehr als 90% überein. Insbesondere sind beide Flächen ungefähr deckungsgleich.

Ein weiterer Aspekt der Erfindung umfasst eine Scheibe mit mindestens einer Scheibe oder einer Verbundscheibe, wobei mindestens eine Sende- und/oder Empfangseinheit mit einem Abstand d auf einer Seite der Scheibe oder Verbundscheibe angeordnet werden kann und der Sende- oder Empfangsbereich auf die Scheibe oder Verbundscheibe derart ausgerichtet werden kann, dass ein von der gegenüberliegenden Seite der Scheibe oder Verbundscheibe eintreffendes Signal erfasst oder auf die gegenüberliegende Seite gesendet werden kann.

Eine Scheibe nach dem Stand der Technik mit einer transparenten, elektrisch leitfähigen Beschichtung dämpft eine ankommende hochfrequente elektromagnetische Strahlung um -15 dB bis -45 dB. Das heißt, die Transmission wird um einen Faktor von 6 bis 178 erniedrigt. Sende- und/oder Empfangseinheiten für das Senden und/oder Empfangen hochfrequenter elektromagnetischer Strahlung wie Mobilfunktransceiver oder GPS-Empfänger, die in einem Fahrzeug nahe einer Windschutzscheibe mit einer derartigen transparenten, elektrisch leitfähigen Beschichtung angeordnet sind, zeigen nur eine sehr eingeschränkte Funktionalität. Das Einbringen eines Kommunikationsfensters nach dem Stand der Technik bei dem die transparente, elektromagnetische Beschichtung in einem kleinen Bereich vollflächig oder rasterförmig entschichtet ist, stellen nur eine befriedigende Lösung dar, wenn die Sende- und/oder Empfangseinheit sehr nahe zur oder unmittelbar an der Windschutzscheibe angeordnet ist. Je weiter die Sende- und/oder Empfangseinheit von der Windschutzscheibe beabstandet ist, desto größer muss das Kommunikationsfenster und damit der entschichtete Bereich sein. Derartige Kommunikationsfenster sind optisch sehr auffällig und werden nur bei geeigneter Kaschierung, beispielsweise durch einen Schwarzdruck, vom Kunden akzeptiert. Des Weiteren ist der Bereich des Kommunikationsfensters großflächig nicht beheizbar.

Die vorliegende Erfindung beruht nun auf der Erkenntnis, dass eine erfindungsgemäße Scheibe mit erfindungsgemäßen entschichteten Strukturen und insbesondere mit einem Aspektverhältnis von Länge zu Breite von größer 5:1 eine ausreichend hohe Durchlässigkeit für hochfrequente elektromagnetische Strahlung aufweist und die Scheibe gleichzeitig noch ausreichend und homogen beheizt werden kann. Im Gegensatz zu Scheiben nach dem Stand der Technik ist es nicht notwendig die transparente, elektrisch leitfähige Beschichtung großflächig zu entschichten. Es genügen entschichtete Strukturen mit einer nur geringen Linienbreite, die die optische Durchsicht und das ästhetische Erscheinungsbild der Scheibe nicht wesentlich beeinträchtigen. Verbessern lässt sich dies nochmals durch die Einführung von mehreren Bereichen mit einer unterschiedlichen Dichte von entschichteten Strukturen in Abhängigkeit vom Einfallswinkel des Signals auf die Scheibe. Durch eine geringe Dichte von entschichteten Strukturen im mittleren Bereich, kann die Störung der Durchsicht für den Fahrer oder die Fahrzeuginsassen geringgehalten werden. Gleichzeigt ist der Einfallswinkel $\alpha$ klein und es trifft genügen Signal auf die Sende- und/oder Empfangseinheit beziehungsweise nach außen. In den kritischen Bereichen mit großen Einfallswinkel $\alpha$ von typischerweise bis zu 70° ist die Dichte der entschichteten Strukturen erfindungsgemäß deutlich erhöht und damit die Transmission durch diese Scheibenbereiche erhöht. Gleichzeitig sind diese Bereiche für die optische Durchsicht von geringerer Bedeutung und stören den Fahrer oder die Fahrzeuginsassen nur in geringem Umfang.

Bei der erfindungsgemäßen Scheibe ist der Anteil der entschichteten Fläche an der Gesamtfläche in dem mittleren Bereich kleiner ist als der Anteil der entschichteten Fläche an der Gesamtfläche in den anderen Bereichen. Bei Scheiben mit mehr als drei Bereichen nimmt vorteilhafterweise der Anteil der entschichteten Fläche an der Gesamtfläche mit zunehmendem Abstand zum mittleren Bereich zu. Bei der erfindungsgemäßen Scheibe hat die entschichtete Struktur die Form eines vollflächig-entschichteten Rechtecks oder eines entschichteten rechteckförmigen Rahmens. Mit diesen Formen konnten besonders hohe Durchlässigkeiten für hochfrequente elektromagnetische Strahlung bei gleichzeitiger hoher Heizleistung und großer Homogenität des Heizfeldes erzielt werden. Hat die entschichtete Struktur die Form eines rechteckförmigen Rahmens, so ist die entschichtete Struktur vorteilhafterweise neben ihrem außenliegenden Rand auch noch an ihrem innenliegenden Rand vollständig von der transparenten elektrisch leitfähigen Beschichtung umrandet und besonders bevorzugt vollständig mit der transparenten elektrisch leitfähigen Beschichtung gefüllt. Mit derartigen entschichteten Strukturen konnten besonders hohe Durchlässigkeiten für hochfrequente elektromagnetische Strahlung mit nur einem geringen Strukturierungsaufwand erzielt werden. Gleichzeitig kann die Prozesszeit und die Prozesskosten niedrig gehalten werden.

In einer vorteilhaften Ausgestaltung der erfindungsgemäßen Scheibe beträgt die Periodizität zwischen den entschichteten Strukturen von 4 mm bis 20 mm, bevorzugt von 5 mm bis 10 mm. Die Periodizität beschreibt den Abstand b mit dem sich die entschichteten Strukturen in einer Reihe wiederholen. Der Abstand b nimmt dabei insbesondere Einfluss auf die Transmission und kann für die Frequenz, für die die Scheibe eine optimale Transmission aufweisen soll, optimiert werden. Der Abstand b ist bevorzugt der horizontale oder vertikale minimale Abstand zwischen zwei entschichteten Strukturen. Für Abstände b von weniger als 1 mm kann eine starke Kopplung zwischen den entschichteten Strukturen erfolgen, die zu einer unerwünschten Erhöhung der Transmissionsdämpfung führt.

In einer weiteren vorteilhaften Ausgestaltung weisen die erfindungsgemäßen entschichteten Strukturen eine Linienbreite d von 0,025 mm bis 0,3 mm und bevorzugt von 0,03 mm bis 0,14 mm auf. Derartige Linienbreiten sind technisch einfach herzustellen, beispielsweise durch Laserstrukturierung. Des Weiteren beeinträchtigen sie wenig die optische Durchsicht durch die Scheibe.

In einer vorteilhaften Ausgestaltung der Erfindung beträgt der minimale Abstand h zwischen zwei benachbarten Reihen mit entschichteten Strukturen innerhalb eines Bereichs von 2 mm bis 150 mm. In einer vorteilhaften Weiterbildung der Erfindung beträgt der Abstand $h_0$ im mittleren Bereich von 35 mm bis 120 mm und besonders bevorzugt von 70 mm bis 100 mm und der Abstand $h_1, h_{1'}$ in den anderen Bereichen von 2 mm bis 20 mm und besonders bevorzugt von 3 mm bis 10 mm. Der minimale Abstand h ist dabei von der Frequenz abhängig, für die die Scheibe eine optimale Transmission aufweisen soll. Gleichzeitig ist er entscheidend für den Anteil der entschichteten Fläche eines Bereichs an dessen Gesamtfläche und damit für die ungestörte optische Durchsicht durch die Scheibe. Der minimale Abstand h ist bevorzugt der horizontale oder vertikale minimale Abstand zwischen zwei benachbarten Breichen. Für minimale Abstände h von weniger als 2 mm kann eine starke Kopplung zwischen den entschichteten Strukturen erfolgen, die zu einer unerwünschten Erhöhung der Transmissionsdämpfung führt.

Die Länge a der entschichteten Strukturen beträgt bevorzugt von 8 mm bis 150 mm. Die Länge a ist auf das Frequenzband oder die Frequenzbänder abgestimmt, für die die Scheibe eine möglichst geringe Transmissionsdämpfung aufweisen soll. Des Weiteren ist die Länge a von dem Flächenwiderstand der transparenten, elektrisch leitfähigen Beschichtung und der effektiven relativen Permittivitätszahl $\varepsilon_{eff}$ der Scheiben und der Zwischenschicht abhängig.

Für einen Mobilfunkbetrieb im GSM 900-Band beträgt die Länge a bevorzugt von 35 mm bis 120 mm und besonders bevorzugt von 40 mm bis 90 mm. Im Bereich von 1,8 GHz beträgt die Länge a mit niedriger Transmissionsdämpfung bevorzugt von 20 mm bis 70 mm. Die optimale Länge a mit niedriger Transmissionsdämpfung bei ausreichender Bandbreite kann vom Fachmann im Rahmen einfacher Simulationen und Experimente ermittelt werden.

Für einen Empfang von GPS-Signalen zur satellitengestützten Navigation beträgt die Länge a bevorzugt von 35 mm bis 120 mm und besonders bevorzugt von 40 mm bis 60 mm. Im Bereich von 1,5 GHz beträgt die Länge a mit niedriger Transmissionsdämpfung bevorzugt von 40 mm bis 60 mm. Die optimale Länge a mit niedriger Transmissionsdämpfung bei ausreichender Bandbreite kann vom Fachmann im Rahmen einfacher Simulationen und Experimente ermittelt werden.

In einer weiteren bevorzugten Ausführungsform beträgt die Länge a der entschichteten Strukturen, unter Vernachlässigung des Flächenwiderstands, von $\lambda/(7*\sqrt{\varepsilon_{eff}})$ bis $(3*\lambda)/(2*\sqrt{\varepsilon_{eff}})$, wobei $\lambda$ die Wellenlänge angibt, für die die Transmission optimiert werden soll. Die Länge a beträgt bevorzugt etwa $\lambda/(4*\sqrt{\varepsilon_{eff}})$. Wie Untersuchungen der Erfinder ergaben, weisen Strukturen mit Längen a in diesem Bereich eine niedrige Transmissionsdämpfung bei ausreichender Bandbreite auf.

In einer weiteren vorteilhaften Ausgestaltung der erfindungsgemäßen Scheibe ist die Länge $a_0$ der entschichteten Struktur in dem mittleren Bereich größer ist als die Länge $a_1$ im ersten Bereich und/oder die Länge $a_{1'}$ im dritten Bereich. Hochfrequente elektromagnetische Strahlung tritt in den unterschiedlichen Bereichen unter einen unterschiedlichen Einfallswinkel durch die Scheibe. Im mittleren Bereich ist der Einfallswinkel gering und in den von dem mittleren Bereich entfernten Bereichen größer. Auch die Länge $a_0$ kann für größere Einfallswinkel im ersten bzw. dritten Bereich an die andere Anregungssituation mit verkürzten Abständen h angepasst sein und in der beschriebenen Ausgestaltung kleiner oder größer gewählt werden.

Es versteht sich, dass die Sammelleiter sowohl horizontal als auch vertikal als auch in einer anderen Richtung auf der Scheibe angeordnet sein können. Folglich sind auch die Längsseiten der entschichteten Strukturen vertikal, horizontal oder in anderen Richtungen anzuordnen.

Die Scheibe enthält bevorzugt Glas, besonders bevorzugt Flachglas, Floatglas, Quarzglas, Borosilikatglas, Kalk-Natron-Glas, oder klare Kunststoffe, vorzugsweise starre klare Kunststoffe, insbesondere Polyethylen, Polypropylen, Polycarbonat, Polymethylmethacrylat, Polystyrol, Polyamid, Polyester, Polyvinylchlorid und/oder Gemische davon. Geeignete Gläser sind beispielsweise aus EP 0 847 965 B1 bekannt.

Die Dicke der Scheibe kann breit variieren und so hervorragend den Erfordernissen des Einzelfalls angepasst werden. Vorzugsweise werden Scheiben mit den Standardstärken von 1,0 mm bis 25 mm und bevorzugt von 1,4 mm bis 2,1 mm verwendet. Die Größe der Scheibe kann breit variieren und richtet sich nach der Größe der erfindungsgemäßen Verwendung.

In einer vorteilhaften Ausgestaltung der Erfindung hat die Scheibe dielektrische Eigenschaften und eine relative Permittivitätszahl von 2 bis 8. Eine Scheibe aus Polymeren hat bevorzugt eine relative Permittivitätszahl von 2 bis 5. Eine Scheibe aus Glas hat bevorzugt eine relative Permittivitätszahl von 6 bis 8 und insbesondere von etwa 7.

Die Scheibe kann eine beliebige dreidimensionale Form aufweisen. Vorzugsweise hat die dreidimensionale Form keine Schattenzonen, so dass sie beispielsweise durch Kathodenzerstäubung beschichtet werden kann. Bevorzugt ist die Scheibe planar oder leicht oder stark in eine Richtung oder in mehrere Richtungen des Raumes gebogen. Die Scheibe kann farblos oder gefärbt sein.

In einer bevorzugten Ausführungsform der erfindungsgemäßen Scheibe als Verbundscheibe enthält mindestens eine der Scheiben Glas und mindestens eine der Scheiben enthält Kunststoff. Insbesondere bei einer erfindungsgemäßen Verwendung als Fahrzeugscheibe enthält die außenliegende Scheibe Glas und die innenliegende Scheibe Kunststoff.

Die Scheiben der Verbundscheibe werden durch mindestens eine Zwischenschicht miteinander verbunden. Die Zwischenschicht enthält vorzugsweise einen thermoplastischen Kunststoff, wie Polyvinylbutyral (PVB), Ethylenvinylacetat (EVA), Polyurethan (PU), Polyethylenterephthalat (PET) oder mehrere Schichten davon, bevorzugt mit Dicken von 0,3 mm bis 0,9 mm.

Die erfindungsgemäße transparente, elektrisch leitfähige Beschichtung ist für elektromagnetische Strahlung, vorzugsweise elektromagnetische Strahlung einer Wellenlänge von 300 bis 1.300 nm, insbesondere für sichtbares Licht, durchlässig. "Durchlässig" bedeutet, dass die Gesamttransmission der Verbundscheibe den gesetzlichen Bestimmungen für Windschutzscheiben und vorderen Seitenscheiben entspricht und insbesondere für sichtbares Licht bevorzugt >70% und insbesondere >75% durchlässig ist. Für hintere Seitenscheiben und Heckscheiben kann "Durchlässig" auch 10% bis 70% Lichttransmission bedeuten.

Die transparente, elektrisch leitfähige Beschichtung ist bevorzugt eine funktionelle Beschichtung, besonders bevorzugt eine funktionelle Beschichtung mit SonnenschutzWirkung. Eine Beschichtung mit Sonnenschutzwirkung weist reflektierende Eigenschaften im Infrarot-Bereich und damit im Bereich der Sonneneinstrahlung auf. Dadurch wird ein Aufheizen des Innenraums eines Fahrzeugs oder Gebäudes infolge von Sonnenstrahlung vorteilhaft vermindert. Solche Beschichtungen sind dem Fachmann bekannt und enthalten typischerweise zumindest ein Metall, insbesondere Silber oder eine silberhaltige Legierung. Die transparente, elektrisch leitfähige Beschichtung kann eine Abfolge mehrerer Einzelschichten umfassen, insbesondere zumindest eine metallische Schicht und dielektrische Schichten, die beispielsweise zumindest ein Metalloxid enthalten. Das Metalloxid enthält bevorzugt Zinkoxid, Zinnoxid, Indiumoxid, Titanoxid, Siliziumoxid, Aluminiumoxid oder dergleichen sowie Kombinationen von einem oder mehreren daraus. Das dielektrische Material kann auch Siliziumnitrid, Siliziumcarbid oder Aluminiumnitrid enthalten.

Dieser Schichtaufbau wird im Allgemeinen durch eine Folge von Abscheidevorgängen erhalten, die durch ein Vakuumverfahren wie die magnetfeldgestützte Kathodenzerstäubung durchgeführt wird. Auf beiden Seiten der Silberschicht können auch sehr feine Metallschichten vorgesehen werden, die insbesondere Titan oder Niob enthalten. Die untere Metallschicht dient als Haft- und Kristallisationsschicht. Die obere Metallschicht dient als Schutz- und Getterschicht, um eine Veränderung des Silbers während der weiteren Prozessschritte zu verhindern.

Besonders geeignete transparente, elektrisch leitfähige Beschichtungen enthalten mindestens ein Metall, bevorzugt Silber, Nickel, Chrom, Niob, Zinn, Titan, Kupfer, Palladium, Zink, Gold, Cadmium, Aluminium, Silizium, Wolfram oder Legierungen daraus, und/oder mindestens eine Metalloxidschicht, bevorzugt Zinn-dotiertes Indiumoxid (ITO), Aluminium-dotiertes Zinkoxid (AZO), Fluor-dotiertes Zinnoxid (FTO, $SnO_2$:F), Antimon-dotiertes Zinnoxid (ATO, $SnO_2$:Sb), und/oder Kohlenstoffnanoröhrchen und/oder optisch transparente, elektrisch leitfähige Polymere, bevorzugt Poly(3,4-ethylenedioxythiophene), Polystyrensulfonat, Poly(4,4-dioctylcylopentadithiophen), 2,3-Dichloro-5,6-dicyano-1,4-benzoquinon, Gemische und/oder Copolymere davon

Die Dicke der transparenten, elektrisch leitfähigen Beschichtung kann breit variieren und den Erfordernissen des Einzelfalls angepasst werden. Wesentlich ist dabei, dass die Dicke der transparenten, elektrisch leitfähigen Beschichtung nicht so hoch werden darf, dass sie für elektromagnetische Strahlung, vorzugsweise elektromagnetische Strahlung einer Wellenlänge von 300 bis 1.300 nm und insbesondere sichtbares Licht, undurchlässig wird. Die transparente, elektrisch leitfähige Beschichtung weist bevorzugt eine Schichtdicke von 10 nm bis 5 $\mu$m und besonders bevorzugt von 30 nm bis 1 $\mu$m auf.

Der Flächenwiderstand der transparenten, elektrisch leitfähigen Beschichtung beträgt bevorzugt von 0,35 Ohm/Quadrat bis 200 Ohm/Quadrat, bevorzugt 0,5 Ohm/Quadrat bis 200 Ohm/Quadrat, ganz besonders bevorzugt von 0,6 Ohm/Quadrat bis 30 Ohm/Quadrat, und insbesondere von 2 Ohm/Quadrat bis 20 Ohm/Quadrat. Die transparente, elektrisch leitfähige Beschichtung kann prinzipiell noch niedrigere Flächenwiderstände als 0,35 Ohm/Quadrat aufweisen, insbesondere wenn bei deren Verwendung nur eine geringe Lichttransmission benötigt wird. Die transparente, elektrisch leitfähige Beschichtung weist bevorzugt gute infrarotreflektierende Eigenschaften und/oder besonders niedrige Emissivitäten (Low-E) auf.

Bei einer vorteilhaften Ausgestaltung der erfindungsgemäßen Verbundscheibe befindet sich mindestens eine transparente, elektrisch leitfähige Schicht auf mindestens einer der innenliegenden Seiten der Scheiben. Im Falle eines Scheibenverbundes aus zwei Scheiben kann sich eine transparente, elektrisch leitfähige Schicht auf der innenliegenden Seite der einen oder der anderen Scheiben befinden. Alternativ kann sich auch jeweils eine transparente, elektrisch leitfähige Schicht auf jeder der beiden innenliegenden Seiten befinden. Im Falle eines Scheibenverbunds aus mehr als zwei Scheiben können sich auch mehrere transparente, elektrisch leitfähige Beschichtungen auf mehreren innenliegenden Seiten der Scheiben befinden. Dabei sind die Bereiche mit entschichteten Strukturen bevorzugt deckungsgleich in den verschiedenen Beschichtungen angeordnet um eine niedrige Transmissionsdämpfung zu gewährleisten

Alternativ kann eine transparente, elektrisch leitfähige Beschichtung zwischen zwei thermoplastischen Zwischenschichten eingebettet sein. Die transparente, elektrisch leitfähige Beschichtung ist dann bevorzugt auf eine Trägerfolie oder Trägerscheibe aufgebracht. Die Trägerfolie oder Trägerscheibe enthält bevorzugt ein Polymer, insbesondere Polyvinylbutyral (PVB), Ethylenvinylacetat (EVA), Polyurethan (PU), Polyethylenterephthalat (PET) oder Kombinationen daraus.

In einer alternativen Ausgestaltung der Erfindung ist die transparente, elektrisch leitfähige Schicht oder eine Trägerfolie mit der transparenten, elektrisch leitfähigen Schicht auf einer Seite einer Einzelscheibe angeordnet.

Die Erfindung umfasst ein Verfahren zur Herstellung einer wie oben beschriebenen erfindungsgemäßen Scheibe, wobei mindestens:

(a) die transparente, elektrisch leitfähige Beschichtung auf der Außenseite und/oder der Innenseite einer ersten Scheibe aufgebracht wird und
(b) mindestens drei Bereich mit mindestens zwei Reihen von entschichteten Strukturen in die transparente, elektrisch leitfähige Beschichtung eingebracht wird.

In einer alternativen Ausführungsform des erfindungsgemäßen Verfahrens kann die transparente, elektrisch leitfähige Beschichtung auf eine Trägerfolie, beispielsweise eine PET-Folie aufgebracht werden. Die Trägerfolie kann direkt oder über mindestens eine Zwischenschicht mit der ersten Scheibe verbunden werden. Der Bereich mit den entschichteten Strukturen kann vor oder nach dem Verbinden mit der ersten Scheibe in die transparente, elektrisch leitfähige Beschichtung eingebracht werden.

Das Aufbringen der transparenten, elektrisch leitfähigen Beschichtung in Verfahrensschritt (a) kann durch an sich bekannte Verfahren erfolgen, bevorzugt durch magnetfeldunterstützte Kathodenzerstäubung. Das ist besonders vorteilhaft im Hinblick auf eine einfache, schnelle, kostengünstige und gleichmäßige Beschichtung der ersten Scheibe. Die transparenten, elektrisch leitfähigen Beschichtung kann aber auch beispielsweise durch Aufdampfen, chemische Gasphasenabscheidung (chemical vapour deposition, CVD), plasmagestützte Gasphasenabscheidung (PECVD) oder durch nasschemische Verfahren aufgebracht werden.

Die erste Scheibe kann nach Verfahrensschritt (a) einer Temperaturbehandlung unterzogen werden. Dabei wird die erste Scheibe mit der elektrisch leitfähigen Beschichtung auf eine Temperatur von mindestens 200°C, bevorzugt mindestens 300°C erwärmt. Die Temperaturbehandlung kann der Erhöhung der Transmission und/oder der Verringerung des Flächenwiderstands der transparenten, elektrisch leitfähigen Beschichtung dienen.

Die erste Scheibe kann nach Verfahrensschritt (a) gebogen werden, typischerweise bei einer Temperatur von 500°C bis 700°C. Da es technisch einfacher ist, eine plane Scheibe zu beschichten, ist dieses Vorgehen vorteilhaft, wenn die erste Scheibe gebogen werden soll. Alternativ kann die erste Scheibe aber auch vor Verfahrensschritt (a) gebogen werden, beispielsweise wenn die transparente, elektrisch leitfähige Beschichtung nicht dazu geeignet ist, einen Biegeprozess ohne Beschädigungen zu überstehen.

Die Entschichtung der entschichteten Strukturen in der transparenten, elektrisch leitfähigen Beschichtung erfolgt bevorzugt durch einen Laserstrahl. Verfahren zum Strukturieren dünner Metallfilme sind beispielsweise aus EP 2 200 097 A1 oder EP 2 139 049 A1 bekannt. Die Breite der Entschichtung beträgt bevorzugt 10 $\mu$m bis 1000 $\mu$m, besonders bevorzugt 25 $\mu$m bis 300 $\mu$m und insbesondere 70 $\mu$m bis 140 $\mu$m. In diesem Bereich findet eine besonders saubere und rückstandsfreie Entschichtung durch den Laserstrahl statt. Die Entschichtung mittels Laserstrahl ist besonders vorteilhaft, da die entschichteten Linien optisch sehr unauffällig sind und das Erscheinungsbild und die Durchsicht nur wenig beeinträchtigen. Die Entschichtung einer Linie der Breite d, die breiter ist als die Breite eines Laserschnitts, erfolgt durch mehrmaliges Abfahren der Linie mit dem Laserstrahl. Die Prozessdauer und die Prozesskosten steigen deshalb mit zunehmender Linienbreite an. Alternativ kann die Entschichtung durch mechanisches Abtragen sowie durch chemisches oder physikalisches Ätzen erfolgen.

Eine vorteilhafte Weiterbildung des erfindungsgemäßen Verfahrens umfasst mindestens die folgenden weiteren Schritte:

(c) Anordnen einer thermoplastischen Zwischenschicht auf der ersten Scheibe und Anordnen einer zweiten Scheibe auf der thermoplastischen Zwischenschicht und

(d) Verbinden der ersten Scheibe und der zweiten Scheibe über die thermoplastische Zwischenschicht.

In Verfahrensschritt (c) wird die erste Scheibe vorteilhafterweise so angeordnet, dass diejenige ihrer Oberflächen, welche mit der elektrisch leitfähigen Beschichtung versehen ist, der Zwischenschicht zugewandt ist. Dies hat den besonderen Vorteil, dass die transparente, elektrisch leitfähige Beschichtung durch das Einlaminieren vor Umwelteinflüssen und Berührung durch den Benutzer geschützt wird.

Die thermoplastische Zwischenschicht kann durch eine einzelne oder auch durch zwei oder mehrere thermoplastische Folien, die flächenmäßig übereinander angeordnet werden, ausgebildet werden.

Das Verbinden von erster und zweiter Scheibe in Verfahrensschritt (d) erfolgt bevorzugt unter Einwirkung von Hitze, Vakuum und/oder Druck. Es können an sich bekannte Verfahren zur Herstellung einer Scheibe verwendet werden.

Es können beispielsweise sogenannte Autoklavverfahren bei einem erhöhten Druck von etwa 10 bar bis 15 bar und Temperaturen von 130°C bis 145°C über etwa 2 Stunden durchgeführt werden. An sich bekannte Vakuumsack- oder Vakuumringverfahren arbeiten beispielsweise bei etwa 200 mbar und 80°C bis 110°C. Die erste Scheibe, die thermoplastische Zwischenschicht und die zweite Scheibe können auch in einem Kalander zwischen mindestens einem Walzenpaar zu einer Scheibe verpresst werden. Anlagen dieser Art sind zur Herstellung von Scheiben bekannt und verfügen normalerweise über mindestens einen Heiztunnel vor einem Presswerk. Die Temperatur während des Pressvorgangs beträgt beispielsweise von 40°C bis 150°C.

Kombinationen von Kalander- und Autoklavverfahren haben sich in der Praxis besonders bewährt. Alternativ können Vakuumlaminatoren eingesetzt werden. Diese bestehen aus einer oder mehreren beheizbaren und evakuierbaren Kammern, in denen die erste Scheibe und die zweite Scheibe innerhalb von beispielsweise etwa 60 Minuten bei verminderten Drucken von 0,01 mbar bis 800 mbar und Temperaturen von 80°C bis 170°C laminiert werden.

Zur Herstellung einer gebogenen Verbundscheibe können die erste Scheibe und die zweite Scheibe vor dem Verfahrensschritt (c) in einem an sich bekannten Heißbiegeprozess gebogen werden. Dabei können die erste und die zweite Scheibe vorteilhafterweise gemeinsam gebogen, so dass eine gleiche Krümmung der Scheiben sichergestellt ist.

Die Erfindung erstreckt sich weiterhin auf die Verwendung einer wie oben beschriebenen Scheibe in einer Fahrzeugkarosserie oder einer Fahrzeugtür eines Fortbewegungsmittels zu Lande, zu Wasser oder in der Luft, in Gebäuden als Teil einer Außenfassade oder als Gebäudefenster und/oder als Einbauteil in Möbeln und Geräten.

Die Verwendung einer erfindungsgemäßen Scheibe als Windschutzscheibe ist besonders vorteilhaft. In Städten sind die Mobilfunksendestationen üblicherweise auf Dächern oder erhöhten Positionen montiert und strahlen von oben herab. Satellitennavigationssignale strahlen ebenso von oben herab auf ein Fahrzeug ein. Die hochfrequente, elektromagnetische Strahlung kann dann in Fahrtrichtung von vorne durch die erfindungsgemäße Windschutzscheibe in den Innenraum des Fahrzeugs gelangen. Da Windschutzscheiben zur Verbesserung der Aerodynamik eine stark geneigte Einbauposition aufweisen, können Mobilfunksignale oder Satellitennavigationssignale, insbesondere von oben, durch die erfindungsgemäße Scheibe hindurch in den Fahrzeuginnenraum gelangen.

Die Erfindung wird nachfolgend anhand einer Zeichnung und eines Beispiels näher erläutert. Die Zeichnung ist nicht vollständig maßstabsgetreu. Die Erfindung wird durch die Zeichnung in keiner Weise eingeschränkt. Es zeigen:

Figur 1      eine schematische Darstellung einer erfindungsgemäßen Scheibe in einer Draufsicht,
Figur 2      eine Querschnittdarstellung entlang der Schnittlinie B-B' aus Figur 1,
Figur 3A      eine vergrößerte Darstellung des Ausschnitts Y der erfindungsgemäßen Scheibe aus Figur 1,
Figur 3B      eine vergrößerte Darstellung eines Ausschnitts der erfindungsgemäßen Scheibe aus Figur 3A,
Figur 3C      eine vergrößerte Darstellung des Ausschnitts Z der erfindungsgemäßen Scheibe aus Figur 1,
Figur 3D      eine vergrößerte Darstellung eines Ausschnitts einer alternativen erfindungsgemäßen Scheibe,
Figur 4      eine Querschnittdarstellung entlang der Schnittlinie A-A' aus Figur 3A,

Figur 5     eine Querschnittdarstellung entlang der Schnittlinie A-A' aus Figur 3A eines alternativen Ausführungsbeispiels einer erfindungsgemäßen Scheibe,

Figur 6     eine Querschnittdarstellung entlang der Schnittlinie A-A' aus Figur 3A eines weiteren alternativen Ausführungsbeispiels einer erfindungsgemäßen Scheibe,

Figur 7A    ein Flussdiagramm eines Ausführungsbeispiels des erfindungsgemäßen Verfahrens,

Figur 7B    ein Flussdiagramm eines alternativen Ausführungsbeispiels des erfindungsgemäßen Verfahrens und

Figur 8     eine schematische Darstellung eines alternativen Ausgestaltungsbeispiels einer erfindungsgemäßen Scheibe in einer Draufsicht.

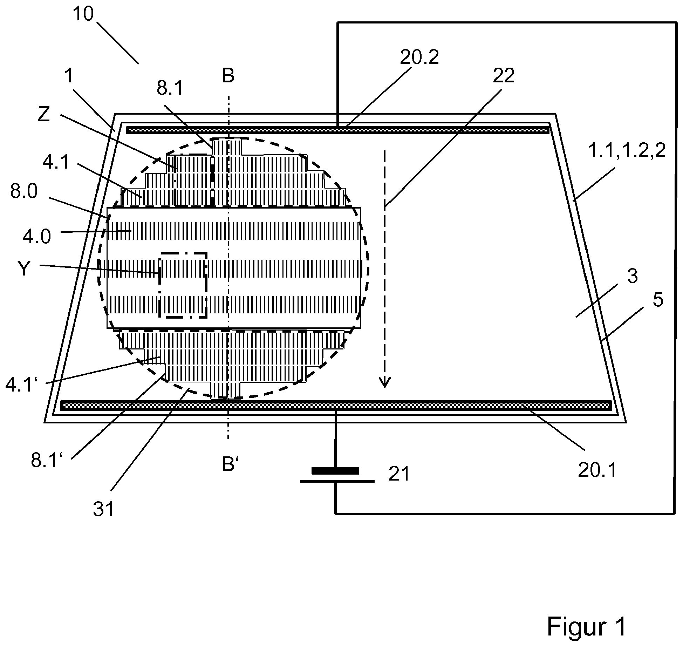

Figur 1 zeigt eine schematische Darstellung einer erfindungsgemäßen Scheibe 10. Die Scheibe 10 ist hier beispielsweise eine Fahrzeugwindschutzscheibe in einer Draufsicht auf die Seite IV, das heißt auf die dem Fahrer und dem Innenraum zugewandte Seite der Scheibe 10.

Die Scheibe 10 umfasst eine erste Scheibe 1.1 auf deren Außenseite III eine transparente elektrisch leitfähige Beschichtung 3 angeordnet ist. Entlang des unteren Scheibenrandes ist ein Sammelleiter 20.1 auf der transparenten elektrisch leitfähigen Beschichtung 3 angeordnet und mit dieser elektrisch leitend verbunden. Entlang des oberen Scheibenrandes ist ein weiterer Sammelleiter 20.2 auf der transparenten elektrisch leitfähigen Beschichtung 3 angeordnet und ebenfalls mit dieser elektrisch leitend verbunden. Die Sammelleiter 20.1 und 20.2 sind an sich bekannt und bestehen beispielsweise aus einem Metallstreifen oder einem aufgedruckten elektrisch leitfähigen Silberdruck. Die beiden Sammelleiter 20.1 und 20.2 sind jeweils beispielsweise mittig, mit einem Anschluss verbunden, mit dem die Sammelleiter 20.1 und 20.2 über Zuleitungen mit einer Spannungsquelle 21 verbunden sind. Die Spannungsquelle 21 ist beispielsweise ein Bordspannungsnetz eines Fahrzeugs oder über Spannungswandler mit einem Bordspannungsnetz eines Fahrzeugs verbunden. Das Anlegen einer Spannung an die Sammelleiter 20.1 und 20.2 führt zur Ausbildung eines Heizstromes der die transparente elektrisch leitfähige Beschichtung 3 durch ohmsche Widerstandsheizung erwärmt. Der dabei entstehende Strompfad 22 ist beispielsweise durch einen Pfeil angedeutet. Er verläuft im Wesentlichen entlang der kürzesten Verbindung zwischen den Sammelleitern 20.1 und 20.2. Bei komplizierteren Scheibengeometrien, bei mehr als zwei Sammelleitern und bei Berücksichtigung des eigenen ohmschen Widerstands der Sammelleiter 20.1 und 20.2 kann der Strompfand 22 gebogen verlaufen. Die exakten realen Strompfade lassen sich für den Fachmann einfach ermitteln, beispielsweise durch Simulationen.

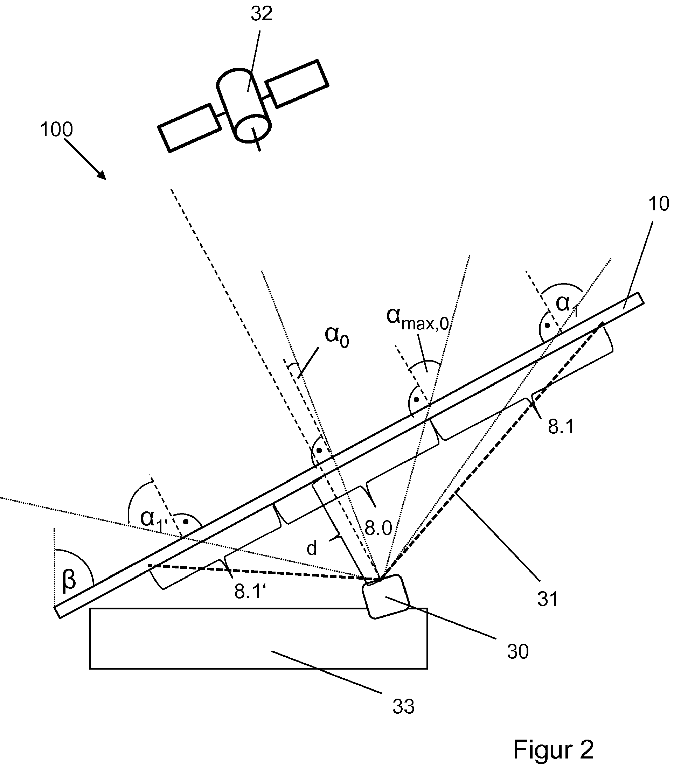

Figur 2 zeigt eine erfindungsgemäße Scheibenanordnung 100. Die Scheibenanordnung 100 enthält beispielsweise eine erfindungsgemäße Scheibe 10, wie sie in Figur 1 ausführlich beschrieben wurde. Die Scheibe 10 ist beispielsweise als Windschutzscheibe in ein Fahrzeug eingebaut. Der Einbauwinkel $\beta$, unter dem die Scheibe 10 zur Vertikalen eingebaut ist, beträgt bevorzugt von 50° bis 65° und beispielsweise 60°. Unterhalb der Scheibe 10 ist das Armaturenbrett 33 angeordnet. Oberhalb des Armaturenbrett 33 ist eine Sende- und/oder Empfangseinheit 30 angeordnet, hier beispielsweise ein GPS-Empfänger zum Empfang von Signalen von Satelliten 32 zur satellitengestützten Navigation. Der Abstand d der Sende- und/oder Empfangseinheit 30 zur Scheibe 10 beträgt beispielsweise 50 cm. Der Sende- und/oder Empfangsbereich 31 der Sende- und/oder Empfangseinheit 30 ist auf die Scheibe 10 ausgerichtet und in diesem Beispiel kegelförmig, so dass der Sende- und/oder Empfangsbereich 31 die Scheibe 10 kreis- oder ellipsenförmig schneidet. Zur optimalen Ausnutzung des Sende- und/oder Empfangsbereichs 31 ist der Sende- und/oder Empfangsbereich 31 in Wesentlichen deckungsgleich mit den Bereichen 8.1,8.0,8.1', die die entschichteten Strukturen 4.1,4.0,4.1' aufweisen.

Die Signale, die von Satelliten 32 ausgesandt werden, treffen unter einem Einfallswinkel $\alpha_{1'},\alpha_0,\alpha_1$ auf die Scheibe 10. Der Einfallswinkel $\alpha_{1'},\alpha_0,\alpha_1$ wird in der Ebene bestimmt, die durch die Normalenrichtung auf die Scheibe 10 und die Richtung des Strompfads 22 gebildet wird. Alternativ kann der Einfallswinkel $\alpha_{1'},\alpha_0,\alpha_1$ in der Ebene bestimmt werden, die durch die Normalenrichtung auf die Scheibe 10 und die Richtung der kürzestens Verbindung zwischen den Sammelleitern 20.1 und 20.2 gebildet wird. Der mittlere Bereich 8.0 ist dabei derart angeordnet, dass der maximale Einfallswinkel $\alpha_{max,0}$ beispielsweise am Übergang des Bereichs 8.0 zum Bereich 8.1 17° beträgt und am Übergang des Bereichs 8.0 zum Bereich 8.1' 17° beträgt. Dies führt dazu, dass der Betrag des Einfallswinkels $\alpha_{1'}$ größer als 17° ist und der Betrag des Einfallswinkels $\alpha_1$ größer als 17° ist. Es versteht sich, dass der maximale Einfallswinkel $\alpha_{max,0}$ am Übergang des Bereichs 8.0 zum Bereich 8.1 der maximale Einfallswinkel $\alpha_{max,0}$ am Übergang des Bereichs 8.0 zum Bereich 8.1' nicht gleich sein muss.

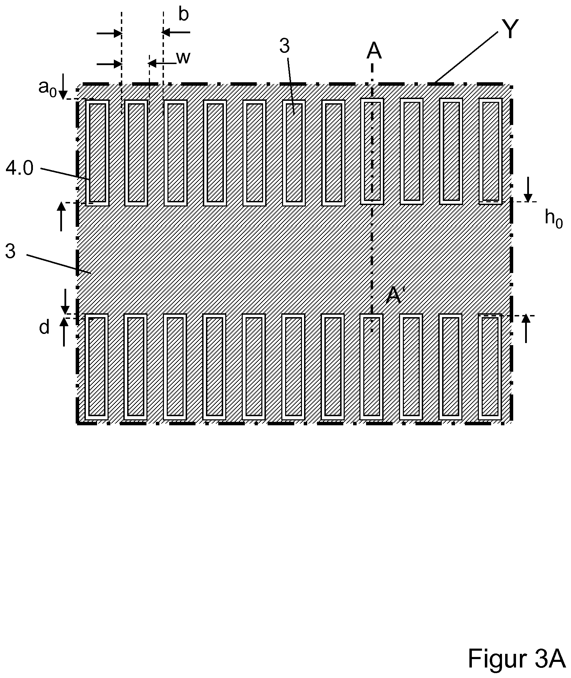

Figur 3A zeigt eine vergrößerte Darstellung des Ausschnitts Y der erfindungsgemäßen Scheibe aus Figur 1 im mittleren Bereich 8.0. Wie in Figur 1 bereits dargestellt, weist die transparente, elektrisch leitfähige Beschichtung 3 im mittleren Bereich 8.0 beispielsweise drei Reihen 9 mit entschichteten Strukturen 4.0 auf. Die entschichteten Strukturen 4.0 sind beispielsweise als entschichteter rechteckförmiger Rahmen ausgebildet und werden beispielsweise durch Laserstrukturierung entschichtet.

Die entschichtete Struktur 4.0 ist vollständig von der transparenten, elektrisch leitfähigen Beschichtung 3 umrandet. Das heißt, die entschichtete Struktur 4.0 ist nicht mit weitereren entschichteten Strukturen oder entschichteten Verbindungslinien oder entschichteten Flächen verbunden. Die entschichtete Struktur 4.0 ist an ihrem äußeren Rand 14 und an ihrem inneren Rand 15 vollständig von der transparenten, elektrisch leitfähigen Beschichtung 3 umgeben. Durch die entschichteten Strukturen 4.0 wird die ansonsten für hochfrequente elektromagnetische Strahlung undurchlässige, transparente elektrisch leitfähige Beschichtung 3 durchlässig.

Die entschichteten Strukturen 4.0 sind in diesem Ausführungsbeispiel für die Durchlässigkeit von GPS-L1-Signalen zur satellitengestützten Navigation mit einer Frequenz von 1,575 GHz optimiert. Die Länge $a_0$ entschichteten Strukturen 4.0 beträgt beispielsweise 55 mm. Die Breite w der entschichteten Strukturen 4.0 beträgt beispielsweise 1 mm. Das Aspektverhältnis der Länge $a_0$ zur Breite w beträgt beispielsweise 55:1.

Die Periodizität b der entschichteten Strukturen 4.0 innerhalb einer Reihe 9 ist bevorzugt konstant und beträgt beispielsweise 7 mm. Der Abstand $h_0$ der Reihen 9 beträgt beispielsweise 85 mm.

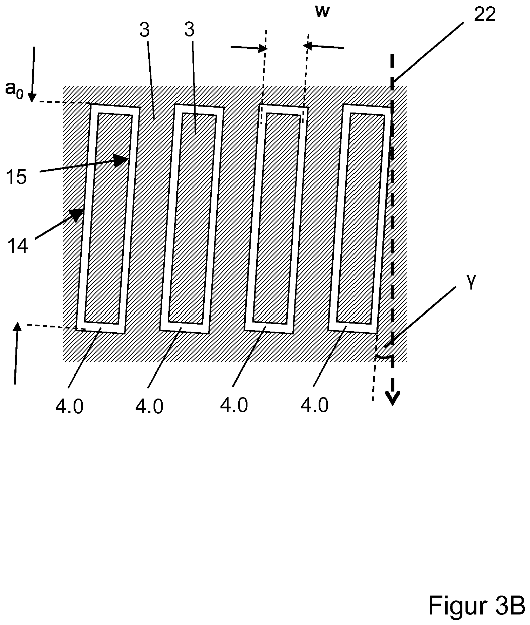

Figur 3B zeigt eine vergrößerte Darstellung eines Ausschnitts der erfindungsgemäßen Scheibe aus Figur 3A. Die entschichteten Strukturen 4.0 sind im Wesentlichen parallel zur Richtung des Strompfads 22 ausgerichtet. Im Wesentlichen bedeutet hier, dass der maximale Winkel $\gamma$ zwischen der Längsrichtung der entschichteten Struktur 4.0 entlang der Länge $a_0$ und der Richtung des Strompfads 22 im Mittel kleiner 30°, bevorzugt kleiner 15° und besonders bevorzugt kleiner 5° ist. Im Mittel bedeutet hier, dass so die Abweichung des Strompfads 22 von seiner globalen Richtung lokal unmittelbar oberhalb und unterhalb der entschichteten Struktur 4.0 abweichen kann. In den hier dargestellten Ausführungsbeispielen beträgt der Winkel $\gamma$ zwischen der Länge a der entschichteten Strukuren 4.0, 4.1, 4.1' im Mittel weniger als 5°.

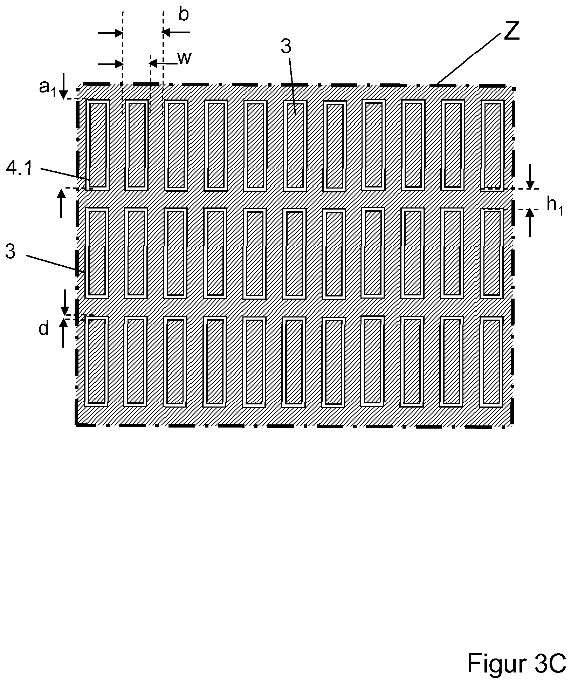

Figur 3C zeigt eine vergrößerte Darstellung des Ausschnitts Z der erfindungsgemäßen Scheibe 10 aus Figur 1 im in Richtung des Strompfads 22 verlaufenden, ersten Bereich 8.1. Der erste Bereich 8.1 grenzt hier beispielsweise an den oberen Sammelleiter 20.2. Die Länge $a_1$ entschichteten Strukturen 4.1 beträgt beispielsweise 45 mm. Die Breite w entschichteten Strukturen 4.1 beträgt beispielsweise 1 mm und entspricht in diesem Beispiel der Breite w der entschichteten Strukturen 4.0. Das Aspektverhältnis der Länge $a_1$ zur Breite w beträgt beispielsweise 45:1. Die Periodizität b der entschichteten Strukturen 4.1 innerhalb einer Reihe 9 ist bevorzugt konstant und beträgt beispielsweise 7 mm. Der Abstand $h_1$ der Reihen 9 beträgt beispielsweise 5 mm.

Die entschichteten Strukturen 4.1' im Bereich 8.1' entsprechen in ihrer Anordnung und ihren Abmessungen denjenigen aus dem ersten Bereich 8.1 und der Beschreibung zur Figur 3C. Es versteht sich, dass die entschichteten Strukturen 4.1' im Bereich 8.1' auch andere Längen $a_{1'}$, Breiten $w_{1'}$, Abstände $b_{1'}$ oder Abstände $h_{1'}$ aufweisen können.

Die entschichteten Strukturen 4.0, 4.1, 4.1' werden beispielsweise durch Laserstrukturierung entschichtet und haben nur eine sehr geringe Linienbreite d von beispielsweise 0,1 mm.

Der periodische Abstand b nimmt insbesondere Einfluss auf die Höhe der Transmissionsdurchlässigkeit und auf die Bandbreite für hochfrequente elektromagnetische Strahlung. Es versteht sich, dass der Abstand b nicht in allen Bereichen konstant sein muss, sondern für den jeweiligen Bereich derart gewählt werden, dass die Transmission durch die Scheibe 10 optimiert wird.

Eine Optimierung erfolgt über die Parameter Länge a, Breite w, die Dichte der entschichteten Strukturen, die sich aus dem periodischen Abstand b und dem Abstand h ergibt, sowie dem Flächenwiderstand. In der folgenden Tabelle sind zur besseren Übersicht die jeweiligen Parameter und deren hauptsächliche Einflussgröße dargestellt:

|  | Transmission | Relative Bandbreite | Resonanzfrequenz |
|---|---|---|---|
| Länge a |  |  | x |
| Breite w | x | x |  |
| Strukturdichte | x |  |  |
| Flächenwiderstand | x | x | x |

Die Länge a ist auf die hochfrequente elektromagnetische Strahlung mit Frequenz f abgestimmt, für die die Scheibe 10 maximal durchlässig sein soll. Die Länge a ist für entschichtete Strukturen 4 in erster Näherung über die Beziehung $a = c/(4 \cdot f \cdot (\varepsilon_{eff})^{0,5})$ von der effektiven relativen Permittivitätszahl $\varepsilon_{eff}$ der Scheibe 1.1, 1.2 und der Zwischenschicht 2 abhängig, wobei c die Lichtgeschwindigkeit ist. Auf Grund von benachbart angeordneten Reihen 9 mit entschichteten Strukturen 4 kann es zur Beeinflussung der Reihen 9 untereinander und damit zur Ausbildung von Resonanzen und Frequenzverschiebungen, die eine Anpassung und Optimierung der Länge a, der Breite b, des vertikalen Abstands d und des horizontalen Abstand h notwendig machen. Diese können durch dem Fachmann geläufige Simulationen berechnet werden.

Die Scheibe 10 aus Figur 2 wurde für den Betrieb von sattelitengestützter Navigation (GPS) optimiert. Durch Variation der Parameter und insbesondere der Länge $a_0, a_1, a_{1'}$ der entschichteten Strukturen 4.0, 4.1, 4.1' kann die Scheibe 10 in einfacher Weise für die Transmission anderer Frequenzbänder oder mehrerer Frequenzbänder optimiert werden.

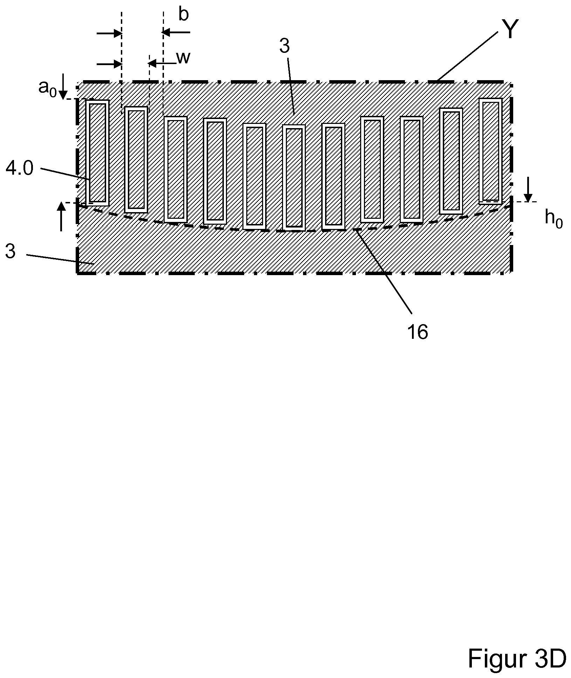

In den Figuren 3A, 3B und 3C sind die entschichteten Strukturen 4.0, 4.1, 4.1' einer Reihe 9 jeweils entlang einer geraden Basislinie angeordnet. Figur 3D zeigt eine vergrößerte Darstellung eines Ausschnitts einer alternativen erfindungsgemäßen Scheibe, bei der die entschichteten Strukturen 4.0, 4.1, 4.1' einer Reihe 9 jeweils entlang einer gekrümmten Basislinie 16 angeordnet sind. Die Krümmung der Basislinie 16 entspricht bevorzugt der Krümmung der unteren oder oberen Kante der Scheibe 10 oder der Krümmung des unteren Sammelleiters 20.1 oder des oberen Sammelleiters 20.2.

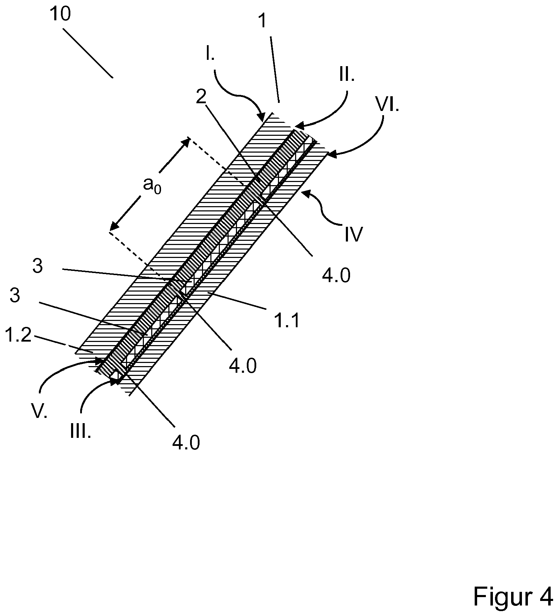

Figur 4 zeigt eine Querschnittsdarstellung entlang der Schnittlinie A-A' aus Figur 3A am Beispiel einer Verbundscheibe. Die Scheibe 10 ist ohne die Erfindung einzuschränken für die Transmission von hochfrequenter elektromagnetischer Strahlung im GPS-Band optimiert. Die Scheibe 10 umfasst eine Verbundscheibe 1 aus zwei einzelnen Scheiben, nämlich einer starren erste Scheibe 1.1 und einer starren zweite Scheibe 1.2, die über eine thermoplastische Zwischenschicht 2 fest miteinander verbunden sind. Die einzelnen Scheiben 1.1,1.2 haben in etwa eine gleiche Größe und sind beispielsweise aus Glas, insbesondere Floatglas, Gussglas und Keramikglas gefertigt, wobei sie gleichermaßen aus einem nichtgläsernen Material, beispielsweise Kunststoff, insbesondere Polystyrol (PS), Polyamid (PA), Polyester (PE), Polyvinylchlorid (PVC), Polycarbonat (PC), Polymethylmethacrylat (PMA) oder Polyethylenterephthalat (PET) hergestellt sein können. Allgemein kann jedes Material mit hinreichender Transparenz, ausreichender chemischer Beständigkeit sowie geeigneter Form- und Größenstabilität verwendet werden. Für eine anderweitige Verwendung, beispielsweise als Dekorteil, wäre es auch möglich, die erste Scheibe 1.1 und die zweite Scheibe 1.2 aus einem flexiblen und/oder einem nichttransparenten Material herzustellen. Die jeweilige Dicke der ersten Scheibe 1.1 und der zweiten Scheibe 1.2 kann je nach Verwendung breit variieren und kann für Glas beispielsweise im Bereich von 1 bis 24 mm liegen. Im vorliegenden Beispiel haben die erste Scheibe 1.1 eine Dicke von 2,1 mm und die zweite Scheibe 1.2 eine Dicke von 1,8 mm.

Die Scheibenflächen sind mit den römischen Ziffern I-IV bezeichnet, wobei Seite I der Außenseite der zweiten Scheibe 1.2, Seite II der Innenseite der zweiten Scheibe 1.1, Seite III der Außenseite der ersten Scheibe 1.1 und Seite IV der Innenseite der ersten Scheibe 1.1 der Verbundscheibe 1 entspricht. Außenseite ist im Sinne der vorliegenden Erfindung die Seite einer Scheibe, die dem Fahrzeugaußenraum zugewandt ist. Innenseite ist die Seite einer Scheibe, die dem Fahrzeuginnenraum zugewandt ist. In der Verwendung als Windschutzscheibe ist die Seite I der äußeren Umgebung und die Seite IV der Fahrgastzelle des Kraftfahrzeugs zugewandt. Es versteht sich, dass die Seite IV auch nach außen weisen kann und die Seite I der Fahrgastzelle des Kraftfahrzeugs zugewandt sein kann.

Die Zwischenschicht 2 zur Verbindung von erster Scheibe 1.1 und zweiter Scheibe 1.2 enthält vorzugsweise einen klebenden Kunststoff bevorzugt auf Basis von Polyvinylbutyral (PVB), Ethylen-Vinyl-Acetat (EVA) oder Polyurethan (PU).

Die Verbundscheibe 1 ist für sichtbares Licht beispielsweise im Wellenlängenbereich von 350 nm bis 800 nm transparent, wobei unter dem Begriff "Transparenz" eine Lichtdurchlässigkeit von mehr als 50%, vorzugsweise mehr als 70% und insbesondere bevorzugt mehr als 75% zu verstehen ist.

Die relative Permittivitätszahl der Scheiben 1.1,1.2 der Verbundscheibe 1 beträgt für Scheiben aus Floatglas von 6 bis 8 und beispielsweise 7.

Im dargestellten Beispiel ist die transparente, elektrisch leitfähige Beschichtung 3 auf die der Zwischenschicht 2 zugewandten Seite III der innenliegenden ersten Scheibe 1.1 aufgebracht. Die transparente, elektrisch leitfähige Beschichtung 3 dient als elektrisch beheizbare Beschichtung. Die transparente, elektrisch leitfähige Beschichtung 3 ist beispielsweise aus EP 0 847 965 B1 bekannt und enthält zwei Silberschichten, die jeweils zwischen mehreren Metall- und Metalloxidschichten eingebettet sind. Die transparente, elektrisch leitfähige Beschichtung 3 hat einen Flächenwiderstand von etwa 1 Ohm/Quadrat. Die transparente, elektrisch leitfähige Beschichtung 3 beispielsweise auch als infrarotreflektierende Schicht wirken. Das bedeutet, dass der Anteil an Wärmestrahlung von eintretendem Sonnenlicht zu einem großen Teil reflektiert wird. Bei Verwendung der Verbundscheibe 1 in einem Fahrzeug sorgt dies für eine verringerte Erwärmung des Innenraums bei Sonneneinstrahlung.

Die transparente, elektrisch leitfähige Beschichtung 3 kann gleichwohl auf die der thermoplastischen Zwischenschicht 2 zugewandten Seite II der außenliegenden, zweiten Scheibe 1.2, oder auf beiden Scheibeninnenseiten II und III angeordnet sein. Die transparente, elektrisch leitfähige Beschichtung 3 kann zusätzlich oder ausschließlich auf einer der Außenseiten I und IV oder beiden Außenseiten I und IV der Verbundscheibe 1 angeordnet sein.

Die transparente, elektrisch leitfähige Beschichtung 3 ist auf der gesamten ersten Scheibe 1.1 aufgebracht, abzüglich eines randentschichteten Bereichs 5. Die Randentschichtung im Bereich 5 verhindert einen Kontakt der transparenten, elektrisch leitfähigen Beschichtung 3, was bei korrosionsempfindlichen Beschichtungen vorteilhaft ist. Weiterhin ist die zweite Scheibe 1.2 beispielsweise mit einer opaken Farbschicht versehen, die auf der Seite II aufgebracht ist und einen rahmenförmig umlaufenden Maskierungsstreifen bildet, welcher in den Figuren nicht näher dargestellt ist. Die Farbschicht besteht vorzugsweise aus einem elektrisch nichtleitenden, schwarz eingefärbten Material, das in die erste 1.1 oder die zweite Scheibe 1.2 eingebrannt werden kann. Der Maskierungsstreifen verhindert einerseits die Sicht auf einen Klebestrang, mit dem die Verbundscheibe 1 in die Fahrzeugkarosserie eingeklebt ist, andererseits dient er als UV-Schutz für das verwendete Klebematerial.

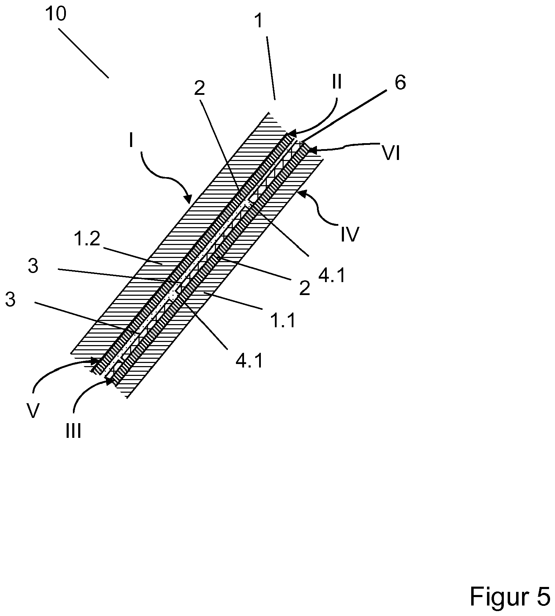

Figur 5 zeigt eine Querschnittdarstellung entlang der Schnittlinie A-A' aus Figur 3A eines alternativen Ausführungsbeispiels einer erfindungsgemäßen Scheibe 10 mit einer Verbundscheibe 1. In diesem Ausführungsbeispiel sind die erste Scheibe 1.1 und die zweite Scheibe 1.2 mit einer dreilagigen Zwischenschicht verbunden. Die dreilagige Zwischenschicht enthält eine Folie 6, die beispielsweise Polyethylenterephthalat (PET) enthält, und die zwischen zwei Schichten 2 eines klebenden Kunststoffs, beispielsweise Polyvinybutyral (PVB) angeordnet ist. Die PET-Folie ist hier beispielsweise als Träger der transparenten, elektrisch leitfähigen Beschichtung 3 ausgebildet.

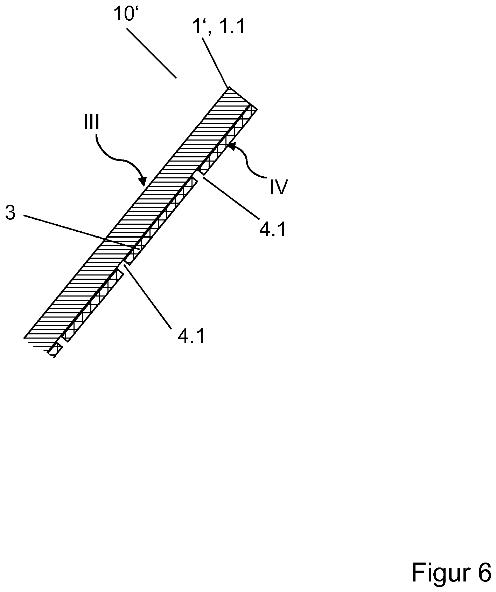

Figur 6 zeigt eine Querschnittdarstellung entlang der Schnittlinie A-A' aus Figur 3A eines alternativen Ausführungsbeispiels einer erfindungsgemäßen Scheibe 10 mit einer Einzelscheibe 1'. Die transparente, elektrisch leitende Beschichtung 3 mit den Bereichen 9 mit entschichteten Strukturen 4.1,4.2 ist auf der dem Fahrzeuginnenraum zugewandten Innenseite IV der Einzelscheibe 1' angeordnet. Form und Material der Einzelscheibe 1' entsprechen der ersten Scheibe 1.1 aus Figur 3A. Die transparente, elektrisch leitende Beschichtung 3 und die Bereiche 8.0,8.1,8.1' entsprechen ebenso dem Ausführungsbeispiel von Figur 3A. Die transparente, elektrisch leitfähige Beschichtung 3 ist hier beispielsweise eine sogenannte Low-E-Schicht und weißt eine niedrige Emissivität für Infrarotstrahlung auf. Die transparente, elektrisch leitfähige Beschichtung 3 enthält oder besteht beispielsweise aus einer Indiumzinnoxid (ITO)-Schicht mit einem Flächenwiderstand von 20 Ohm/Quadrat. Die Indiumzinnoxid-Schicht inert gegenüber Umwelteinflüssen und kratzfest ausgebildet, so dass die Indiumzinnoxid-Schicht beispielsweise auf der einem Fahrzeuginnenraum zugewandten Oberfläche einer Seitenscheibe eines Kraftfahrzeugs angeordnet sein kann. Transparente, elektrisch leitfähige Beschichtungen 3 mit derart hohen Flächenwiderständen können zur elektrischen Beheizung entsprechend hohe Betriebsspannungen von mehr als 100 V benötigen, wie sie beispielsweise in Elektrofahrzeugen vorhanden sind. Zur elektrischen Sicherheit und wegen der Kratz- und Korrosionsempfindlichkeit kann die stromdurchflossene beheizbare transparente, elektrisch leitfähige Beschichtung 3 durch eine Isolationsschicht geschützt sein, die beispielsweise eine Polymerfolie wie Polyethylenterephthalat (PET) oder Polyvinylfluorid (PVF) enthält. Alternativ kann die transparente, elektrisch leitfähige Beschichtung 3 eine isolierende und kratzfeste Deckschicht aus anorganischen Oxiden aufweisen, wie Siliziumoxid, Titanoxid, Tantalpentoxid oder Kombinationen daraus.

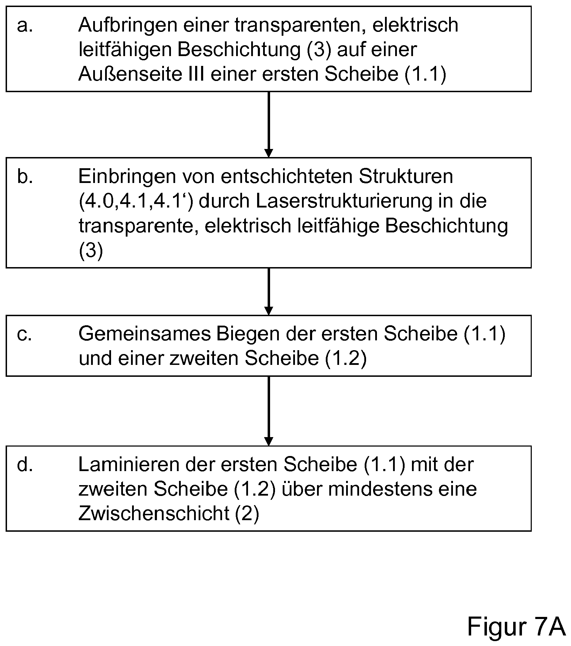

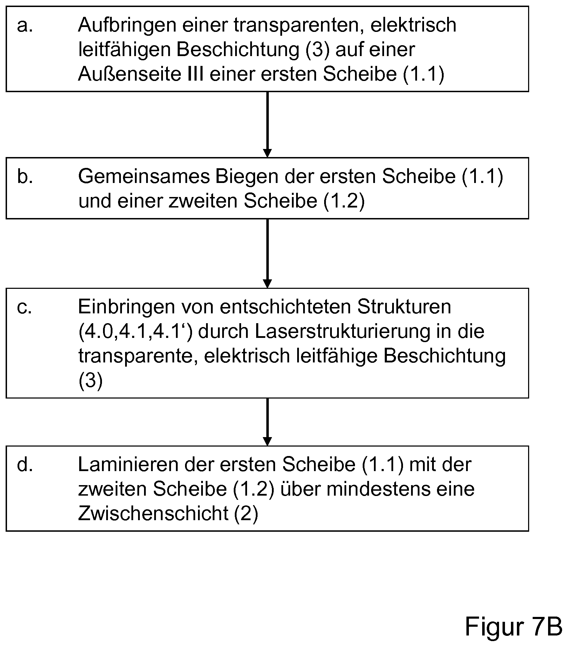

Figur 7A zeigt ein Flussdiagramm eines Ausführungsbeispiels des erfindungsgemäßen Verfahrens zur Herstellung einer erfindungsgemäßen Scheibe 10. Figur 7B zeigt ein Flussdiagramm einer weiteren Variante eines Ausführungsbeispiels des erfindungsgemäßen Verfahrens zur Herstellung einer erfindungsgemäßen Scheibe 10. Im Unterschied zu Figur 7A werden in Figur 7B die erste Scheibe 1.1 und die zweite Scheibe 1.2 zuerst gebogen und danach die entschichteten Strukturen 4.0,4.1,4.1' eingebracht.

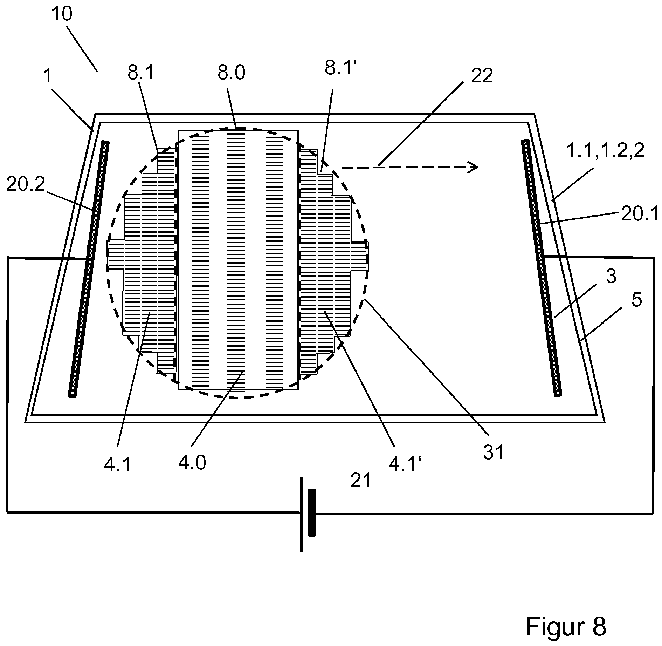

Figur 8 zeigt ein weiteres Ausführungsbeispiel einer erfindungsgemäßen Scheibe 10. Die Sammelleiter 20.1 und 20.2 sind in diesem Beispiel an den vertikalen Seiten der Scheibe 10 angeordnet. Der sich bei Anlegen einer Spannung ausbildende Heizstrom hat einen Strompfad 22, der im Mittel horizontal in der transparenten, elektrisch leitfähigen Beschichtung 3 über die Scheibe 10 verläuft. Da für eine ausreichende und homogene Heizleistung die längere Seite der entschichteten Strukturen 4.0,4.1,4.1' mit der Länge $a_0,a_1,a_1'$ im Wesentlichen parallel zur Richtung des Strompfads 22 ausgerichtet sein muss, sind die Bereiche 8.0,8.1,8.1' in horizontaler Richtung nebeneinander angeordnet. Die entschichteten Strukturen 4.0,4.1,4.1' sind dementsprechend mit ihrer Längsrichtung horizontal angeordnet. Die Reichen 9 sind hier in vertikaler Richtung angeordnet. Ansonsten entspricht die in Figur 8 dargestellte Scheibe 10 der Scheibe 10 aus Figur 1.

Die erfindungsgemäße Scheibe 10 weist entscheidende Vorteile zu Scheiben nach dem Stand der Technik auf. Die erfindungsgemäße Scheibe 10 ist elektrisch über die komplette Scheibe beheizbar und weist dennoch eine genügend hohe Transmission für elektromagnetische Strahlung auf. Die Anteil an entschichteter Fläche durch die entschichteten Strukturen 4.0 im zentralen Sichtfeld des Fahrers ist reduziert und ermöglicht eine gute optische Durchsicht für den Fahrer. Durch die Erhöhung des Anteils an entschichteter Fläche in den Randbereichen der Scheibe 10 mit großen Einfallswinkels $\alpha$, können auch diese Bereiche 8.1,8.1' effektiv für die Transmission von hochfrequenter elektromagnetischer Strahlung genutzt werden und die Gesamttransmission der Scheibe deutlich erhöht werden.

Dieses Ergebnis war für den Fachmann unerwartet und überraschend.


Bezugszeichenliste

| | |
|---|---|
| 1 | Verbundscheibe |
| 1' | Einzelscheibe |
| 1.1 | erste Scheibe, |
| 1.2 | zweite Scheibe |
| 2 | Zwischenschicht |
| 3 | transparente, elektrisch leitfähige Beschichtung |
| 4,4.0,4.1,4.1' | entschichteter Bereich, entschichtete Struktur |

| 5 | Randentschichtung |
| 6 | Trägerfolie |
| 8.0,8.1,8.1' | Bereich |
| 9 | Reihe |
| 10 | Scheibe |
| 14 | außenliegender Rand |
| 15 | innenliegender Rand |
| 16 | Basislinie einer Reihe 9 |
| 20.1,20.2 | Sammelleiter |
| 21 | Spannungsquelle |
| 22 | Strom pfad |
| 30 | Sende- und/oder Empfangseinheit |
| 31 | Sende- und/oder Empfangsbereich |
| 32 | Satellit |
| 33 | Armaturenbrett |
| 100 | Scheibenanordnung |

| $\alpha$ | Einfallswinkel, Austrittswinkel |
| $\beta$ | Einbauwinkel der Scheibe 10 |
| $\gamma$ | Winkel zwischen entschichteter Struktur 4 und Strompfad 22 |
| A-A' | Schnittlinie |
| B-B' | Schnittlinie |
| $a, a_0, a_1, a_1'$ | Länge einer entschichteten Struktur 4,4.0,4.1,4.1' |
| b | periodischer Abstand zwischen zwei entschichteten Strukturen 4 in einer Reihe 9 |
| d | Linienbreite einer entschichteten Struktur 4,4.0,4.1,4.1' |
| $\varepsilon_{eff}$ | effektive relative Permittivitätszahl |
| h | Abstand benachbarter Reihen 9 eines Bereichs 8.0,8.1,8.1' |
| w | Breite einer entschichteten Struktur 4,4.0,4.1,4.1' |
| $\lambda$ | Wellenlänge |
| Y | Ausschnitt |
| Z | Ausschnitt |

| I | Außenseite der zweiten Scheibe 1.2 |
| II | Innenseite der zweiten Scheibe 1.2 |
| III | Außenseite der ersten Scheibe 1.1 |
| IV | Innenseite der ersten Scheibe 1.1 |
| V | Seite der Zwischenschicht 2 |
| VI | Seite der Zwischenschicht 2 |

**Patentansprüche**

1. Scheibe (10), umfassend:

- mindestens eine erste Scheibe (1.1) mit einer Außenseite (III) und einer Innenseite (IV),
- mindestens eine transparente, elektrisch leitfähige Beschichtung (3), die auf der Außenseite (III) und/oder der Innenseite (IV) der ersten Scheibe (1.1) angeordnet ist, und
- mindestens zwei zum Anschluss an eine Spannungsquelle (21) vorgesehene Sammelleiter (20.1, 20.2), die mit der transparenten, elektrisch leitfähigen Beschichtung (3) so verbunden sind, dass zwischen den Sammelleitern (20.1, 20.2) ein Strompfad (22) für einen Heizstrom geformt ist, wobei
- die transparente, elektrisch leitfähige Beschichtung (3) mindestens drei Bereiche (8.1,8.0,8.1') mit entschichteten Strukturen (4) aufweist,
- die Bereiche (8.1,8.0,8.1') nebeneinander und entlang des Strompfads (22) angeordnet sind,
- jeder Bereich (8.1,8.0,8.1') mindestens zwei Reihen (9) von entschichteten Strukturen (4) aufweist, und
- die entschichtete Struktur (4) die Form eines vollflächig-entschichteten Rechtecks oder eines entschichteten rechteckförmigen Rahmens mit einer Länge a und einer Breite w aufweist, wobei die Länge a größer als die Breite w ist und ein maximaler Winkel $\gamma$ zwischen der Längsrichtung der entschichteten Struktur (4) und der Richtung des Strompfads (22) im Mittel kleiner oder gleich 30° ist,

**dadurch gekennzeichnet, dass**

- das Verhältnis von Länge a zu Breite w größer 5:1 beträgt,
- der Anteil der entschichteten Fläche an der Gesamtfläche in einem mittleren Bereich (8.0) der Scheibe (10) kleiner ist als der Anteil der entschichteten Fläche an der Gesamtfläche in einem oberen Bereich (8.1) der Scheibe (10) und/oder einem unteren Bereich (8.1') der Scheibe (10).

2. Scheibe (10) nach Anspruch 1, wobei das Verhältnis von Länge a zu Breite w größer 10:1 und insbesondere von 150:1 bis 25:1 beträgt.

3. Scheibe (10) nach einem der Ansprüche 1 oder 2, wobei die Länge a der entschichteten Struktur (4) von 8 mm bis 150 mm beträgt.

4. Scheibe (10) nach einem der Ansprüche 1 bis 3, wobei die Länge a der entschichteten Struktur (4) von $\lambda/(7 * \sqrt{\varepsilon_{eff}})$ bis $(3 * \lambda)/(2 * \sqrt{\varepsilon_{eff}})$ beträgt, wobei $\varepsilon_{eff}$ die effektive relative Permittivitätszahl der Scheibe (10) ist und $\lambda$ die Wellenlänge angibt, für die die Transmission durch die Scheibe (10) optimierbar ist.

5. Scheibe (10) nach einem der Ansprüche 1 bis 4, wobei die Länge $a_0$ der entschichteten Struktur (4) in dem mittleren Bereich (8.0) der Scheibe (10) größer ist als die Länge $a_1$ im oberen Bereich (8.1) der Scheibe (10) und/oder die Länge $a_{1'}$ im unteren Bereich (8.1') der Scheibe (10).

6. Scheibe (10) nach einem der Ansprüche 1 bis 5, wobei eine Linienbreite d der entschichteten Struktur (4) von 25 $\mu$m bis 300 $\mu$m und bevorzugt 30 $\mu$m bis 140 $\mu$m beträgt.

7. Scheibe (10) nach einem der Ansprüche 1 bis 6, wobei ein periodische Abstand b zwischen zwei in einer Reihe unmittelbar benachbarten entschichteten Strukturen (4) von 4 mm bis 20 mm und bevorzugt von 5 mm bis 10 mm beträgt und besonders bevorzugt konstant ist und/oder das Verhältnis aus Abstand b zur Breite w von 3:1 bis 20:1, bevorzugt von 5:1 bis 10:1, beträgt.

8. Scheibe (10) nach einem der Ansprüche 1 bis 7, wobei ein minimaler Abstand h in Richtung des Strompfades (22) zwischen benachbarten Reihen (9) von 2 mm bis 150 mm beträgt.

9. Scheibe (10) nach einem der Ansprüche 1 bis 8, wobei der Bereich (8.0,8.1,8.1') mindestens zwei Reihen (9), bevorzugt 3 bis 7 Reihen (9) aufweist und/oder jede Reihe (9) mindestens zwei, bevorzugt 5 bis 200 und besonders bevorzugt 20 bis 110 entschichtete Strukturen (4.0,4.1,4.1') aufweist.

10. Scheibe (10) nach einem der Ansprüche 1 bis 9, wobei die erste Scheibe (1.1) und/oder die zweite Scheibe (1.2) Glas, bevorzugt Flachglas, Floatglas, Quarzglas, Borosilikatglas, Kalk-Natron-Glas, oder Polymere, bevorzugt Polyethylen, Polypropylen, Polycarbonat, Polymethylmethacrylat und/oder Gemische davon enthält und/oder eine effektive relative Permittivitätszahl $\varepsilon_{eff}$ von 2 bis 8 und bevorzugt von 6 bis 8 aufweist.

11. Scheibe (10) nach einem der Ansprüche 1 bis 10, wobei die transparente, elektrisch leitfähige Beschichtung (3) mindestens ein Metall enthält, bevorzugt Silber, Nickel, Chrom, Niob, Zinn, Titan, Kupfer, Palladium, Zink, Gold, Cadmium, Aluminium, Silizium, Wolfram oder Legierungen daraus, und/oder mindestens eine Metalloxidschicht, bevorzugt Zinn-dotiertes Indiumoxid (ITO), Aluminium-dotiertes Zinkoxid (AZO), Fluor-dotiertes Zinnoxid (FTO, $SnO_2$:F), Antimon-dotiertes Zinnoxid (ATO, $SnO_2$:Sb), und/oder Kohlenstoffnanoröhrchen und/oder optisch transparente, elektrisch leitfähige Polymere, bevorzugt Poly(3,4-ethylenedioxythiophene), Polystyrensulfonat, Poly(4,4-dioctylcylopen-tadithiophen), 2,3-Dichloro-5,6-dicyano-1,4-benzoquinon, Gemische und/oder Copolymere davon und/oder die transparente, elektrisch leitfähige Beschichtung (3) einen Flächenwiderstand von 0,35 Ohm/Quadrat bis 200 Ohm/Quadrat, bevorzugt 0,35 Ohm/Quadrat bis 30 Ohm/Quadrat aufweist.

12. Verbundscheibe (1) mindestens umfassend:

   - eine Scheibe (10) nach einem der Ansprüche 1 bis 11 und
   - eine zweite Scheibe (1.2), die über mindestens eine Zwischenschicht (2) mit der Scheibe (10) flächig verbunden ist.

13. Scheibenanordnung (100) mindestens umfassend:

- eine Scheibe (10) nach einem der Ansprüche 1 bis 11 oder eine Verbundscheibe (1) nach Anspruch 12 und
- eine Sende- und/oder Empfangseinheit (30) mit einem Sende- und/oder Empfangsbereich (31),
wobei
- die Sende- und/oder Empfangseinheit (30) auf einer Seite der Scheibe (10) oder Verbundscheibe (1) angeordnet ist und der Sende- oder Empfangsbereich (31) auf die Scheibe (10) oder Verbundscheibe (1) derart ausgerichtet ist, dass ein von der gegenüberliegenden Seite eintreffendes Signal erfasst oder auf die gegenüberliegende Seite gesendet werden kann,
- der mittlere Bereich (8.0) der Scheibe (10) derart angeordnet ist, dass das Signal unter einem maximalen Einfallswinkel $\alpha_{max,0}$ von 5° bis 30°, bevorzugt von 10° bis 20°, auf die Scheibe (10) oder Verbundscheibe (1) trifft oder diese verlässt und
- im oberen oder unteren Bereich (8.1, 8.1') der Scheibe (10) der Betrag des Einfallswinkel $\alpha$ größer als der maximale Einfallswinkel $\alpha_{max,0}$ ist.

14. Scheibenanordnung (100) nach Anspruch 13, wobei der Abstand d zwischen Sende- und/oder Empfangseinheit (30) und der Scheibe (10) oder Verbundscheibe (1) größer 80 mm und bevorzugt von 80 mm bis 750 mm ist.

15. Verfahren zur Herstellung einer Scheibe (10) nach einem der Ansprüche 1 bis 11, wobei mindestens:

a. eine transparente, elektrisch leitfähige Beschichtung (3) auf der Außenseite (III) und/oder der Innenseite (IV) einer ersten Scheibe (1.1) aufgebracht wird und
b. mindestens drei Bereiche (8.0,8.1,8.1') mit mindestens zwei Reihen (9) von entschichteten Strukturen (4.0,4.1,4.1') durch Laserstrukturierung in die transparente, elektrisch leitfähige Beschichtung (3) eingebracht werden.

16. Verwendung einer Scheibe (10) nach einem der Ansprüche 1 bis 11 oder einer Verbundscheibe (1) nach Anspruch 12 als Verglasung mit niedriger Transmissionsdämpfung für hochfrequente elektromagnetische Strahlung, in einer Fahrzeugkarosserie oder einer Fahrzeugtür eines Fortbewegungsmittels zu Lande, zu Wasser oder in der Luft, bevorzugt als Windschutzscheibe, in Gebäuden als Teil einer Außenfassade oder eines Gebäudefensters und/oder als Einbauteil in Möbeln und Geräten.

**Claims**

1. Pane (10), comprising:

- at least one first pane (1.1) with an outer face (III) and an inner face (IV),
- at least one transparent, electrically conductive coating (3), which is arranged on the outer face (III) and/or the inner face (IV) of the first pane (1.1), and
- at least two busbars (20.1, 20.2), which are provided for connecting to a voltage source (21) and which are connected to the transparent, electrically conductive coating (3) such that a current path (22) for a heating current is formed between the busbars (20.1, 20.2),

wherein

- the transparent, electrically conductive coating (3) has at least three regions (8.1,8.0,8.1') with de-coated structures (4),
- the regions (8.1,8.0,8.1') are arranged adjacent one another and along the current path (22),
- each region (8.1,8.0,8.1') has at least two rows (9) of de-coated structures (4), and
- the de-coated structure (4) has the form of a full-surface de-coated rectangle or of a de-coated rectangular frame with a length a and a width w, wherein the length a is greater than the width w and a maximum angle $\gamma$ between the longitudinal direction of the de-coated structure (4) and the direction of the current path (22) is, on average, less than or equal to 30°,

**characterized in that**

- the ratio of length a to width w is greater than 5:1,

- the proportion of the de-coated area to the total area in the central region (8.0) of the pane (10) is less than the proportion of the de-coated area to the total area in the upper region (8.1) of the pane (10) and/or the lower region (8.1') of the pane (10).

2. Pane (10) according to claim 1, wherein the ratio of length a to width w is greater than 10:1, and in particular is from 150:1 to 25:1.

3. Pane (10) according to one of claims 1 or 2, wherein the length a of the de-coated structure (4) is from 8 mm to 150 mm.

4. Pane (10) according to one of claims 1 through 3, wherein the length a of the de-coated structure (4) is from $\lambda/(7*\sqrt{\varepsilon_{eff}})$ to $(3*\lambda)/(2*\sqrt{\varepsilon_{eff}})$ , where $\varepsilon_{eff}$ is the effective relative permittivity of the pane (10) and $\lambda$ indicates the wavelength for which the transmission through the pane (10) is optimizable.

5. Pane (10) according to one of claims 1 through 4, wherein the length $a_0$ of the de-coated structure (4) in the central region (8.0) of the pane (10) is greater than the length $a_1$ in the upper region (8.1) of the pane (10) and/or the length $a_{1'}$ in the lower region (8.1') of the pane (10).

6. Pane (10) according to one of claims 1 through 5, wherein a line width d of the de-coated structure (4) is from 25 $\mu$m to 300 $\mu$m and preferably 30 $\mu$m to 140 $\mu$m.

7. Pane (10) according to one of claims 1 through 6, wherein a periodic distance b between two de-coated structures (4) immediately adjacent in a row is from 4 mm to 20 mm and preferably from 5 mm to 10 mm and particularly preferably is constant and/or the ratio of distance b to the width w is from 3:1 to 20:1, preferably from 5:1 to 10:1.

8. Pane (10) according to one of claims 1 through 7, wherein a minimum distance h in the direction of the current path (22) between adjacent rows (9) is from 2 mm to 150 mm.

9. Pane (10) according to one of claims 1 through 8, wherein the region (8.0,8.1,8.1') has at least two rows (9), preferably 3 to 7 rows (9) and/or each row (9) has at least two, preferably 5 to 200 and particularly preferably 20 to 110 de-coated structures (4.0,4.1,4.1').

10. Pane (10) according to one of claims 1 through 9, wherein the first pane (1.1) and/or the second pane (1.2) contains glass, preferably flat glass, float glass, quartz glass, borosilicate glass, soda lime glass, or polymers, preferably polyethylene, polypropylene, polycarbonate, polymethyl methacrylate, and/or mixtures thereof and/or has an effective relative permittivity $\varepsilon_{eff}$ from 2 to 8 and preferably from 6 to 8.

11. Pane (10) according to one of claims 1 through 10, wherein the transparent, electrically conductive coating (3) contains at least one metal, preferably silver, nickel, chromium, niobium, tin, titanium, copper, palladium, zinc, gold, cadmium, aluminum, silicon, tungsten, or alloys thereof, and/or at least one metal oxide layer, preferably tin-doped indium oxide (ITO), aluminum-doped zinc oxide (AZO), fluorine-doped tin oxide (FTO, $SnO_2$:F), antimony-doped tin oxide(ATO, $SnO_2$:Sb), and/or carbon nanotubes and/or optically transparent, electrically conductive polymers, preferably poly(3,4-ethylenedioxythiophenes), polystyrene sulfonate, poly(4,4-dioctyl cylopentadithiophene), 2,3-dichloro-5,6-dicyano-1,4-benzoquinone, mixtures and/or copolymers thereof and/or the transparent, electrically conductive coating (3) has a sheet resistance from 0.35 ohm/square to 200 ohm/square, preferably 0.35 ohm/square to 30 ohm/square.

12. Laminated pane (1) comprising at least:

- a pane (10) according to one of claims 1 through 11 and
- a second pane (1.2) that is areally bonded to the pane (10) via at least one intermediate layer (2).

13. Pane arrangement (100) comprising at least:

- a pane (10) according to one of claims 1 through 11 or a laminated pane (1) according to claim 12 and
- a transmitting and/or receiving unit (30) with a transmitting and/or receiving region (31),
wherein
- the transmitting and/or receiving unit (30) is arranged on one face of the pane (10) or laminated pane (1) and the transmitting or receiving region (31) is aligned on the pane (10) or laminated pane (1) such that an incoming signal from the opposite side can be acquired or sent to the opposite side,
- the central region (8.0) of the pane (10) is arranged such that the signal strikes or exits the pane (10) or laminated pane (1) at a maximum angle of incidence $\alpha_{max,0}$ from 5° to 30°, preferably from 10° to 20°, and
- in the upper or lower region (8.1, 8.1') of the pane (10) the amount of the angle of incidence $\alpha$ is greater than the maximum angle of incidence $\alpha_{max,0}$.

**14.** Pane arrangement (100) according to claim 13, wherein the distance d between the transmitting and/or receiving unit (30) and the pane (10) or laminated pane (1) is greater than 80 mm and preferably from 80 mm to 750 mm.

**15.** Method for producing a pane (10) according to one of claims 1 through 11, wherein at least:

a. a transparent, electrically conductive coating (3) is applied on the outer face (III) and/or the inner face (IV) of a first pane (1.1), and
b. at least three regions (8.0,8.1,8.1') with at least two rows (9) of de-coated structures (4.0,4.1,4.1') are introduced into the transparent, electrically conductive coating (3) by laser patterning.

**16.** Use of a pane (10) according to one of claims 1 through 11 or a laminated pane (1) according to claim 12 as a glazing with low transmission attenuation for high-frequency electromagnetic radiation, in a vehicle body or a vehicle door of a means of transportation on land, on water, or in the air, preferably as a windshield, in buildings as part of an external façade or a building window and/or as a built-in part in furniture and appliances.

**Revendications**

**1.** Vitre (10), comprenant :

- au moins une première vitre (1.1) avec une face externe (III) et une face interne (IV)
- au moins un revêtement transparent et conducteur d'électricité (3), qui est disposé sur l'extérieur (III) et/ou sur l'intérieur (IV) de la première vitre (1.1), et
- au moins deux conducteurs collectifs (20.1, 20.2) prévus pour être connectés à une source de tension (21), qui sont liés au revêtement transparent et conducteur d'électricité (3) de telle manière qu'entre les conducteurs collectifs (20.1, 20.2) un trajet de courant (22) est formé pour un courant de chauffage,
où
- le revêtement transparent et conducteur d'électricité (3) possède au moins trois domaines de revêtement (8.1, 8.0, 8.1') avec structures décapées (4),
- les zones (8.1, 8.0, 8.1') sont disposées côte à côte et le long du trajet de courant (22)
- chaque zone (8.1, 8.0, 8.1') possède au moins deux rangées (9) de structures décapées (4), et
- la structure décapée (4) a la forme d'un cadre rectangulaire décapé sur toute sa surface ou un cadre décapé rectangulaire avec une longueur a et une largeur w, où la longueur a est supérieure à la largeur w et l'angle maximal $\gamma$ entre la direction longitudinale de la structure décapée (4) et la direction du trajet de courant (22) en moyenne est inférieure ou égale à 30°,

**caractérisée en ce que**

- la longueur a est supérieure à largeur w dans un rapport de 5:1,
- la proportion de la surface décapée par rapport à la superficie totale dans la zone centrale (8,0) de la vitre (10) est plus petite que la proportion de la surface décapée par rapport à la superficie totale dans la zone supérieure (8.1) de la vitre (10) et/ou la zone inférieure (8.1) de la vitre (10).

**2.** Vitre (10) selon la revendication 1, où le rapport de la longueur a à la largeur w est supérieur à 10 : 1 et en particulier est de 150:1 à 25:1.

**3.** Vitre (10) selon l'une des revendications 1 ou 2, où la longueur de la structure décapée (4) est de 8 mm à 150 mm.

**4.** Vitre (10) selon l'une des revendications 1 à 3, où la longueur d'une structure décapée (4) est de $\lambda/(7*\sqrt{\varepsilon_{eff}})$

to $\lambda)/(2 * \sqrt{\varepsilon_{eff}})$ , où $\varepsilon_{eff}$ est la permittivité relative effective de la vitre (10) et $\lambda$ indique la longueur d'onde, pour laquelle la transmission par la vitre (10) pourrait être optimisée.

5. Vitre (10) selon l'une des revendications 1 à 4, où la longueur $a_0$ de la structure décapée (4) dans la zone centrale de la vitre (10) (8.0) est supérieure à la longueur $a_1$ dans la zone supérieure (8.1) de la vitre (10) et/ou la longueur $a_1$ dans la zone inférieure de la vitre (10) (8.1).

6. Vitre (10) selon l'une des revendications 1 à 5, où une largeur de ligne d de la structure décapée (4) est de 25 $\mu$m à 300 $\mu$m et de préférence est de 30 $\mu$m à 140 $\mu$m.

7. Vitre (10) selon l'une des revendications 1 à 6, où une distance périodique b entre deux structures décapées (4) immédiatement contiguës d'une rangée est de 4 mm à 20 mm et de préférence de 5 mm à 10 mm et de manière particulièrement préférée est constante et/ou le rapport entre la distance b et la largeur w est de 3:1 à 20:1, de préférence de 5:1 à 10:1.

8. Vitre (10) selon l'une des revendications 1 à 7, où une distance minimale h en direction du trajet de courant (22) entre des lignes adjacentes (9) est de 2 mm à 150 mm.

9. Vitre (10) selon l'une des revendications 1 à 8, où la zone (8.0, 8.1, 8.1') présente au moins deux rangées (9), de préférence de 3 à 7 rangées (9) et/ou chaque rangée (9) a au moins deux, de préférence de 5 à 200 et de manière particulièrement préférée de 20 à 110 structures décapées (4.0,4.1,4.1').

10. Vitre (10) selon l'une des revendications 1 à 9, où la première vitre et/ou la deuxième vitre (1.2) présente du verre, de préférence du verre plat, du verre flotté, du verre de quartz, du verre borosilicaté, du verre sodocalcique ou des polymères, de préférence du polyéthylène, du polypropylène, du polycarbonate, du polyméthacrylate de méthyle et/ou des mélanges de ceux-ci, et/ou une permittivité relative effective $\varepsilon_{eff}$ est de 2 à 8 et de préférence de 6 à 8.

11. Vitre (10) selon l'une des revendications 1 à 10, ou le revêtement transparent et conducteur d'électricité (3) contient au moins un métal, de préférence de l'argent, du nickel, du chrome, du niobium, de l'étain, du titane, du cuivre, du palladium, de l'or, du cadmium, du zinc, de l'aluminium, du silicium, du tungstène ou des alliages de ceux-ci, et/ou au moins une couche d'oxyde métallique, de préférence de l'oxyde d'indium dopé à l'étain (ITO), de l'oxyde de zinc dopé à l'aluminium (AZO), de l'oxyde d'étain dopé au fluor (FTO, $SnO_2$:F), de l'oxyde d'étain dopé à l'antimoine (ATO, $SnO_2$:Sb), et/ou des nanotubes de carbone et/ou des polymères conducteurs d'électricité optiquement transparents de préférence du poly-3,4-éthylènedioxythiophène, organique, du sulfonate de polystyrène, du poly(4,4-dioctylcylopentadithiophen), du 2,3-dichloro-5,6-dicyano-1,4-benzoquinone, des mélanges ou des copolymères de ceux-ci et/ou le revêtement transparent et conducteur d'électricité (3) possède une résistance superficielle de 0,35 ohms/carré à 200 ohms/carré, de préférence de 0,35 ohms/carré à 30 ohms/carré.

12. Vitre feuilletée (1) comprenant au moins :

- une vitre (10) selon l'une des revendications 1 à 11 et
- une deuxième vitre (1, 2), qui est liée par au moins une couche intermédiaire (2) avec la vitre (10) sur toute sa surface.

13. Arrangement de vitres (100) comprenant au moins :

- une vitre (10) selon l'une des revendications 1 à 11 ou une vitre feuilletée (1) selon la revendication 12 et
- une unité de transmission et/ou de réception (30) avec une zone de transmission et/ou de la réception (31), où
- l'unité de transmission et/ou de réception (30) est disposée sur une face de la vitre (10) ou de la vitre stratifiée (1) et la zone de transmission ou de réception (31) est orientée sur la vitre (10) ou la vitre stratifiée (1) de manière à pouvoir détecter un signal arrivant depuis la face opposée ou l'envoyer à la face opposé,
- la zone centrale (8,0) de la vitre (10) est orientée de manière à ce que le signal tombe sur la vitre (10) ou la vitre stratifiée (1) ou la quitte à un angle maximum $\alpha_{max,0}$ de 5° à 30°, de préférence de 10° à 20°, et
- dans la zone supérieure ou inférieure (8.1, 8. 1') de la vitre (10) ou du verre stratifié (1) la taille de l'angle d'incidence est supérieur à la taille de l'angle maximal $\alpha_{max.0}$.

**14.** Arrangement de vitres (100), selon la revendication 13, où la distance d entre l'unité d'envoi et/ou de réception (30) et la vitre (10) ou la vitre stratifiée (1) est supérieure à 80 mm et de préférence de 80 mm à 750 mm.

**15.** Méthode de fabrication d'une vitre (10) selon l'une des revendications 1 à 11, où au moins :

a. un revêtement transparent et conducteur d'électricité (3) est appliqué à l'extérieur (III) ou à l'intérieur (IV) d'une première vitre (1.1) et
b. au moins trois zones (8.0, 8.1, 8.1') avec au moins deux rangées (9) de structures décapées (4.0, 4.1, 4.1') sont insérées par structuration laser dans le revêtement transparent et conducteur d'électricité (3).

**16.** Utilisation d'une vitre (10) selon l'une des revendications 1 à 11 ou d'une vitre feuilletée (1) selon la revendication 12 pour les vitrages avec atténuation faible de la transmission pour le rayonnement électromagnétique de haute fréquence, dans une carrosserie de véhicule ou une portière d'un moyen de locomotion sur la terre, dans l'eau ou dans l'air, de préférence comme pare-brise, dans des bâtiments comme élément d'une façade extérieure ou d'une fenêtre de bâtiment ou comme accessoire dans les meubles et les équipements.

Figur 1

Figur 2

Figur 3A

Figur 3B

Figur 3C

Figur 3D

Figur 4

Figur 5

Figur 6

a.    Aufbringen einer transparenten, elektrisch leitfähigen Beschichtung (3) auf einer Außenseite III einer ersten Scheibe (1.1)

b.    Einbringen von entschichteten Strukturen (4.0,4.1,4.1') durch Laserstrukturierung in die transparente, elektrisch leitfähige Beschichtung (3)

c.    Gemeinsames Biegen der ersten Scheibe (1.1) und einer zweiten Scheibe (1.2)

d.    Laminieren der ersten Scheibe (1.1) mit der zweiten Scheibe (1.2) über mindestens eine Zwischenschicht (2)

Figur 7A

a.     Aufbringen einer transparenten, elektrisch leitfähigen Beschichtung (3) auf einer Außenseite III einer ersten Scheibe (1.1)

b.     Gemeinsames Biegen der ersten Scheibe (1.1) und einer zweiten Scheibe (1.2)

c.     Einbringen von entschichteten Strukturen (4.0,4.1,4.1') durch Laserstrukturierung in die transparente, elektrisch leitfähige Beschichtung (3)

d.     Laminieren der ersten Scheibe (1.1) mit der zweiten Scheibe (1.2) über mindestens eine Zwischenschicht (2)

## Figur 7B

Figur 8

**EP 3 085 199 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 378917 A
- WO 2010043598 A1
- EP 1605729 A2
- EP 0717459 A1
- US 20030080909 A1
- DE 19817712 C1
- US 2004200821 A1
- EP 0847965 B1
- EP 2200097 A1
- EP 2139049 A1